# EUROPEAN PATENT SPECIFICATION

(11) **EP 3 156 253 B1**
(45) Date of publication and mention of the grant of the patent: **09.06.2021**
(21) Application number: 15809289.0
(22) Date of filing: 22.04.2015
(51) Int. Cl.: B41M 1/28, B41M 5/00, B41M 5/382, B60B 7/00

(54) **VEHICULAR WHEEL**
FAHRZEUGRAD
ROUE DE VÉHICULE

(30) Priority: 16.06.2014 JP 2014123695; 16.06.2014 JP 2014123694; 10.10.2014 JP 2014208607
(43) Date of publication of application: 19.04.2017
(73) Proprietor: Yamaha Hatsudoki Kabushiki Kaisha, Iwata-shi, Shizuoka 438-8501 (JP)
(72) Inventor: OISHI, Takeshi, Iwata-shi Shizuoka 438-8501 (JP)
(74) Representative: Stöckeler, Ferdinand
(86) International application number: PCT/JP2015/062277
(87) International publication number: WO 2015/194256

(56) References cited:
- EP-A1- 2 420 392
- WO-A1-2007/054248
- CN-U- 203 329 906
- FR-A1- 2 952 587
- JP-A- H05 286 114
- JP-A- H05 286 114
- JP-A- 2000 025 404
- JP-U- 3 149 592

## Description

### [Technical Field]

The present invention relates to a vehicular wheel.

### [Background]

For example, in the case where a rim portion of a vehicular wheel is to be decorated, an area to be decorated is relatively long. Conventionally, when an area to be decorated is relatively long, decoration is performed by painting or attaching stickers. Such decoration technologies provide a uniform decorative state throughout the longitudinal direction of the area to be decorated.

For example, Patent Literature 1 describes that a groove for a decorative pattern is formed on a rim portion of a vehicular wheel, and paint is filled in this groove. Further, Patent Literature 2 describes that a plurality of arc-shaped stickers are attached to a rim portion of a vehicular wheel so as to have an annular shape as a whole.

### [Citation List]

### [Patent Literatures]

[Patent Literature 1] Japanese Unexamined Patent Publication No. 2007-001432
[Patent Literature 2] Japanese Utility Model No. 3149592

JP H05 286114 A describes an approach for screen printing on a wheel.

WO 2007/054248 A1 describes a wheel, particularly a spoked wheel, including a rim having an outer wall surface facing the axis of the wheel and which comprises, on a circumferential portion thereof, a finite sequence of symbols such as alphanumeric characters provided in a color contrasting with the color of the outer wall surface.

FR 2 952 587 A1 describes a wheel having a fairing supported on a wheel rim and formed of a thermoformed plastic material or of thermoformable matrix composite material. The fairing comprises two semi-shells integrated as assembly closer to an internal radial edge unit of the fairing.

### [Summary of the Invention]

### [Technical Problems]

When a groove is painted as in Patent Literature 1, if a design formed as decoration is a line, forming the groove and painting the groove therefore are easy. However, in the case of a complex design such as a character, forming a groove and painting the groove therefore are difficult. Therefore, decoration by painting as in Patent Literature 1 has a limitation regarding decoration content, and thus, provides a low degree of freedom in decoration.

In the case of attaching stickers, the degree of freedom in decoration is high. However, a sticker is attached by an operator. In addition, the operator has to attach a sticker to the rim portion without a clear indication about where to attach the sticker. A high skill is needed for sticker alignment, which deteriorates productivity. Therefore, when a long area to be decorated is decorated with a plurality of stickers as in Patent Literature 2, the number of times of sticker alignment is increased, which further deteriorates productivity.

The present invention aims to provide a vehicular wheel that includes a decorated rim portion and that can be manufactured while maintaining high productivity even with a high degree of freedom in decoration.

This object is achieved by a wheel according to claim 1.

### [Technical Solution and Advantageous Effect of Invention]

A vehicular wheel according to the present teaching includes: an annular rim portion; a hub portion disposed inside of the rim portion; and a spoke portion that connects the rim portion and the hub portion, wherein the rim portion includes: a first decorated portion that is formed by directly applying ink onto a decoration surface of the rim portion and includes a pattern having a non-uniform length in a direction orthogonal to the circumferential direction of the rim portion; and a second decorated portion that is formed by directly applying ink onto the decoration surface of the rim portion, is arranged with the first decorated portion in the circumferential direction of the rim portion, and includes the same pattern as the first decorated portion.

A vehicular wheel according to the present teaching includes an annular rim portion, a hub portion disposed inside of the rim portion, and a spoke portion that connects the rim portion and the hub portion. The vehicular wheel includes a first decorated portion and a second decorated portion which are formed on a decoration surface of the rim portion. The first decorated portion is formed by directly applying ink onto the decoration surface of the rim portion, and includes a pattern having a non-uniform length in a direction orthogonal to the circumferential direction of the rim portion. The second decorated portion is formed by directly applying ink onto the decoration surface of the rim portion, is arranged with the first decorated portion in the circumferential direction of the rim portion, and includes a pattern the same as the first decorated portion.

Ink is directly applied onto the first decorated portion and the second decorated portion. Therefore, the first decorated portion and the second decorated portion are formed by printing. Printing includes both forme-based printing and formeless printing. Examples of forme-based printing include screen printing and pad printing. In forme-based printing, ink is transferred from a forme (corresponding to a pad in pad printing) to a printing target. Examples of the formeless printing include electrostatic photocopying (used by photocopiers), melting/dye-sublimation heat transfer (used by thermal printers), and inkjet printing. The first decorated portion and the second decorated portion include a pattern having a non-uniform length in a direction orthogonal to the circumferential direction of the rim portion. The pattern described above may not be formed by painting a groove for decoration, coating using a masking, or attaching stickers. Even if it is possible, much time is required, and therefore, productivity deteriorates. On the other hand, the first decorated portion and the second decorated portion in the present teaching are formed by printing, and thus, a degree of freedom in decoration and productivity can be enhanced.

It is preferable in the vehicular wheel according to the present teaching that the first decorated portion and the second decorated portion be separated from each other in the circumferential direction of the rim portion.

According to this configuration, an end of the first decorated portion in the circumferential direction of the rim portion and an end of the second decorated portion in the circumferential direction of the rim portion are separated from each other. Therefore, printing misalignment between the first decorated portion and the second decorated portion is less visible as compared with the case where the first decorated portion and the second decorated portion are partly overlapped with each other or the case where an end of the first decorated portion and an end of the second decorated portion are located in the same position. Accordingly, even if the first decorated portion or the second decorated portion is slightly shifted, this hardly causes a defect, and thus, productivity can be improved.

It is preferable in the vehicular wheel according to the present teaching that an end of the first decorated portion in the circumferential direction of the rim portion extend obliquely with respect to a direction orthogonal to the circumferential direction of the rim portion.

In the case where the first decorated portion and the second decorated portion are formed by pad printing using a roll-shaped pad, if an end of the first decorated portion in the circumferential direction of the rim portion is orthogonal to the circumferential direction of the rim portion, ink for forming the end is likely to be left on the outer circumferential surface of the pad. On the other hand, in the present teaching, since an end of the first decorated portion in the circumferential direction of the rim portion extends obliquely with respect to a direction orthogonal to the circumferential direction of the rim portion, ink for forming the end is hardly left on the outer circumferential surface of the pad. Accordingly, a printing quality of the first decorated portion and the second decorated portion is easily attained. Consequently, productivity can further be enhanced.

It is preferable in the vehicular wheel according to the present teaching that the first decorated portion includes a first pattern including an end of the first decorated portion in the circumferential direction of the rim portion, and a second pattern separated from the first pattern in the circumferential direction of the rim portion.

According to this configuration, the first decorated portion includes a first pattern including an end of the first decorated portion in the circumferential direction of the rim portion, and a second pattern separated from the first pattern in the circumferential direction of the rim portion. With this configuration, a gap between the first decorated portion and the second decorated portion is easily utilized for design.

It is preferable in the vehicular wheel according to the present teaching that facing ends of the first pattern and the second pattern of the first decorated portion extend obliquely with respect to a direction orthogonal to the circumferential direction of the rim portion.

In the case where the first decorated portion and the second decorated portion are formed by pad printing using a roll-shaped pad, if facing ends of the first pattern and the second pattern are orthogonal to the circumferential direction of the rim portion, ink for forming the ends is likely to be left on the outer circumferential surface of the pad. On the other hand, in the present teaching, since facing ends of the first pattern and the second pattern extend obliquely with respect to a direction orthogonal to the circumferential direction of the rim portion, ink for forming the ends is hardly left on the outer circumferential surface of the pad. Accordingly, a printing quality of the first decorated portion and the second decorated portion is easily attained. Consequently, productivity can further be enhanced.

It is preferable in the vehicular wheel according to the present teaching that the first decorated portion and the second decorated portion have the same color.

It is preferable in the vehicular wheel according to the present teaching that the rim portion include a third decorated portion formed by directly applying ink onto the decoration surface of the rim portion, arranged with the first decorated portion and the second decorated portion in the circumferential direction of the rim portion, and including a pattern the same as the first decorated portion.

It is preferable in the vehicular wheel according to the present teaching that the rim portion include a fourth decorated portion formed by directly applying ink onto the decoration surface of the rim portion, arranged with the first decorated portion and the second decorated portion in the circumferential direction of the rim portion, and including a pattern different from the first decorated portion.

It is preferable in the vehicular wheel according to the present teaching that the fourth decorated portion has a color different from at least one of the first decorated portion and the second decorated portion.

It is preferable that the vehicular wheel according to the present teaching be a wheel for a straddled vehicle.

### [Brief Description of the Drawings]

[FIG. 1] FIG. 1 is a side view of a vehicular decorative wheel (vehicular wheel) according to a first embodiment.
[FIG. 2] FIG. 2 is a schematic cross-section of the vehicular decorative wheel in FIG. 1.
[FIG. 3] FIG. 3 is a plan view of a decorating device that decorates the vehicular decorative wheel according to the first embodiment.
[FIG. 4] FIG. 4 is a cross-section taken at the A-A line in FIG. 3.
[FIG. 5] FIG. 5 is a view showing a part of a process for decorating the vehicular wheel by the decorating device shown in FIG. 3.
[FIG. 6] FIG. 6 is a diagram showing a relationship between a part of a process for decorating the vehicular wheel by the decorating device shown in FIG. 3 and time.
[FIG. 7] FIG. 7 is a diagram showing a relationship between a part of a process for decorating the vehicular wheel by the decorating device shown in FIG. 3 and time.
[FIG. 8] FIG. 8 is a view showing a part of a process for decorating the vehicular wheel by the decorating device shown in FIG. 3.
[FIG. 9] FIG. 9 is a perspective view of a vehicular decorative wheel (vehicular wheel) according to a second embodiment.
[FIG. 10] FIG. 10 is a plan view showing a decorating device that decorates the vehicular decorative wheel according to the second embodiment, and showing a state of applying ink onto a pad.
[FIG. 11] FIG. 11 is a front view of a pad and a forme roll in the decorating device shown in FIG. 10.
[FIG. 12] FIG. 12 is a plan view showing the decorating device in FIG. 10 and showing a state of performing decoration.
[FIG. 13] FIG. 13 is a cross-section taken at the B-B line in FIG. 12.
[FIG. 14] FIG. 14 is a plan view showing a part of the decorating device in FIG. 10 and showing a state of cleaning a pad.
[FIG. 15] FIG. 15 is a plan view showing the decorating device in FIG. 10 and showing a state of applying ink onto a pad.
[FIG. 16] FIG. 16 is a diagram showing a relationship between a process for decorating the vehicular wheel by the decorating device shown in FIG. 10 and time.
[FIG. 17] FIG. 17 is a side view of a vehicular decorative wheel (vehicular wheel) according to a third embodiment.
[FIG. 18] FIG. 18 is a plan view showing a decorating device that decorates the vehicular decorative wheel according to the third embodiment, and showing a state of applying ink onto a pad.
[FIG. 19] FIG. 19 is a plan view showing the decorating device in FIG. 18 and showing a state of performing decoration.
[FIG. 20] FIG. 20 is a cross-section taken at the C-C line in FIG. 19.
[FIG. 21] FIG. 21 is a diagram showing a relationship between a process for decorating the vehicular wheel by the decorating device shown in FIG. 18 and time.
[FIG. 22] FIG. 22 is a side view of a vehicular decorative wheel (vehicular wheel) according to a fourth embodiment.
[FIG. 23] FIG. 23 is a plan view showing a decorating device that decorates the vehicular decorative wheel according to the fourth embodiment, and showing a state of performing decoration.
[FIG. 24] FIG. 24 is a diagram showing a relationship between a process for decorating the vehicular wheel by the decorating device shown in FIG. 23 and time.
[FIG. 25] FIG. 25 is a side view of a vehicular decorative wheel (vehicular wheel) according to a fifth embodiment.
[FIG. 26] FIG. 26 is a plan view of a decorating device that decorates the vehicular decorative wheel according to the fifth embodiment.
[FIG. 27] FIG. 27 is a plan view showing the decorating device in FIG. 26 and showing a state of performing decoration.
[FIG. 28] FIG. 28 is a cross-section taken at the D-D line in FIG. 27.
[FIG. 29] FIG. 29 is a diagram showing a relationship between a process for decorating the vehicular wheel by the decorating device shown in FIG. 26 and time.

### [Preferred Embodiments of Invention]

### <First Embodiment>

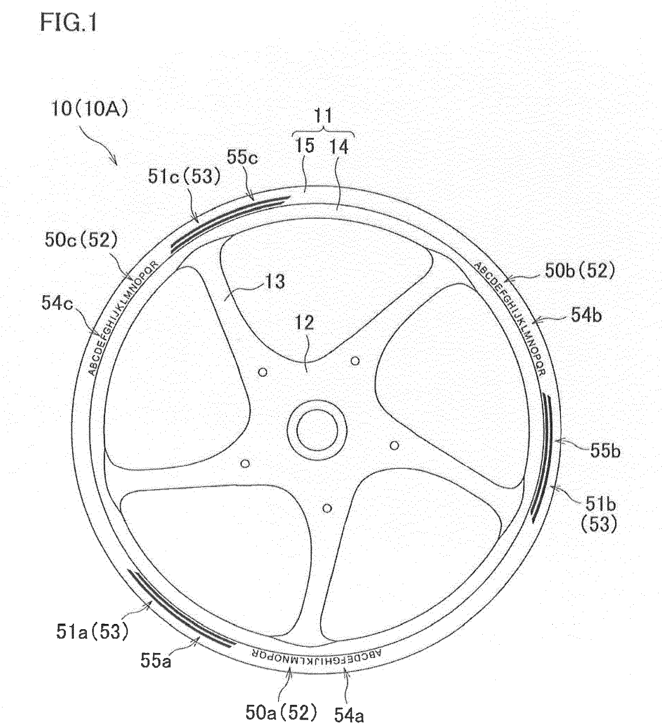

The following describes a first embodiment of the present teaching. The present embodiment is one example in which the present teaching is applied to a vehicular wheel for a motorcycle. FIG. 1 illustrates a vehicular wheel 10A according to the present embodiment decorated by a subsequently-described decorating device 1. Hereinafter, the vehicular wheel 10A decorated by the decorating device 1 is referred to as a vehicular decorative wheel 10A. The decorating device 1, the detail of which is described below, decorates the vehicular wheel 10 by pad printing. That is, the vehicular decorative wheel 10A is decorated by pad printing.

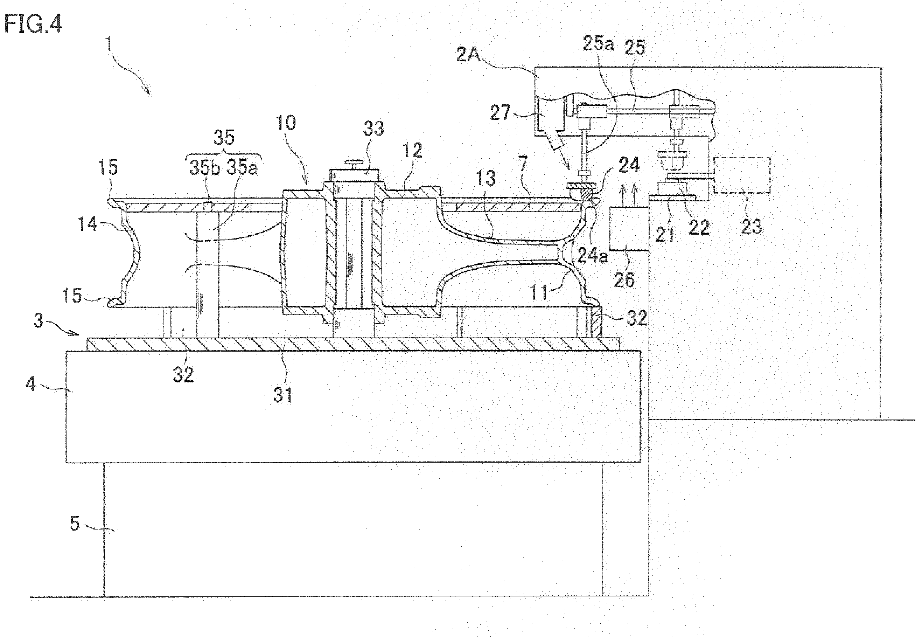

The vehicular wheel 10 that is an object to be decorated is described. As illustrated in FIGS. 1 and 4, the vehicular wheel 10 includes an annular rim portion 11, a hub portion 12 disposed inside of the rim portion 11, and a spoke portion 13 that connects the rim portion 11 and the hub portion 12. An axle shaft of a motorcycle is inserted into the hub portion 12. A tire is mounted to the rim portion 11. As illustrated in FIG. 4, the rim portion 11 has a bottom wall portion 14 formed into a substantially cylindrical shape, and two side wall portions 15 extending radially outward from both ends of the bottom wall portion 14 in the axle direction. The outer surface (the surface distant from the other side wall portion 15) of the side wall portion 15 is formed substantially parallel to the direction orthogonal to the central axis of the rim portion 11. The axial end portions of the inner circumferential surface of the bottom wall portion 14 are formed to be substantially parallel to the central axis of the rim portion 11.

Decorated portions 50a to 50c and 51a to 51c which are arranged in the circumferential direction are formed on the outer surface of the side wall portion 15 of the rim portion 11 of the vehicular decorative wheel 10A. The positions where the decorated portions 50a to 50c are formed on the rim portion 11 of the vehicular wheel 10 are defined as decoration positions 54a to 54c. Further, the positions where the decorated portions 51a to 51c are formed on the rim portion 11 of the vehicular wheel 10 are defined as decoration positions 55a to 55c. In the present embodiment, the entire circumferential area of the outer surface of the side wall portion 15 of the rim portion 11 of the vehicular wheel 10 corresponds to a decoration surface according to the present teaching.

Each of the decorated portions 50a to 50c is composed of a character 52. The decorated portions 50a to 50c are arranged with a pitch of 120°. The decorated portions 50a to 50c are spaced in the circumferential direction of the rim portion 11. Each of the decorated portions 51a to 51c is composed of a line 53. The decorated portions 51a to 51c are arranged with a pitch of 120° at positions not overlapping with the decorated portions 50a to 50c. The decorated portions 51a to 51c are spaced in the circumferential direction of the rim portion 11. The circumferential length of each of the decorated portions 50a to 50c is almost the same as the circumferential length of each of the decorated portions 51a to 51c. In the present embodiment, the circumferential length of each of the decorated portions 50a to 50c and each of the decorated portions 51a to 51c corresponds to an angular range of about 30° of the side wall portion 15 of the rim portion 11. However, it is not limited thereto.

The length of each of the decorated portions 50a to 50c composed of the character 52 is not uniform in the radial direction (the direction orthogonal to the circumferential direction) in the circumferential direction of the rim portion 11. Further, both ends of the decorated portions 51a to 51c (line 53) in the circumferential direction are tilted with respect to the radial direction (the direction orthogonal to the circumferential direction of the rim portion 11) of the rim portion 11. Thus, the length of each of the decorated portions 51a to 51c (line 53) in the radial direction (the direction orthogonal to the circumferential direction) is not uniform in the circumferential direction of the rim portion 11.

The vehicular wheel 10 is black. The decorated portions 50a to 50c and 51a to 51c have a color different to white and black. The decorated portions 50a to 50c have the same color, and the decorated portions 51a to 51c have the same color. In the present embodiment, the decorated portions 50a to 50c and the decorated portions 51a to 51c have different colors. However, they may have the same color.

The decorated portions 50a to 50c correspond to a first decorated portion, a second decorated portion, and a third decorated portion in the present teaching. The same is applied to the decorated portions 51a to 51c. In addition, in the case where any one of the decorated portions 50a to 50c corresponds to the first decorated portion, the decorated portions 51a to 51c correspond to a fourth decorated portion in the present teaching.

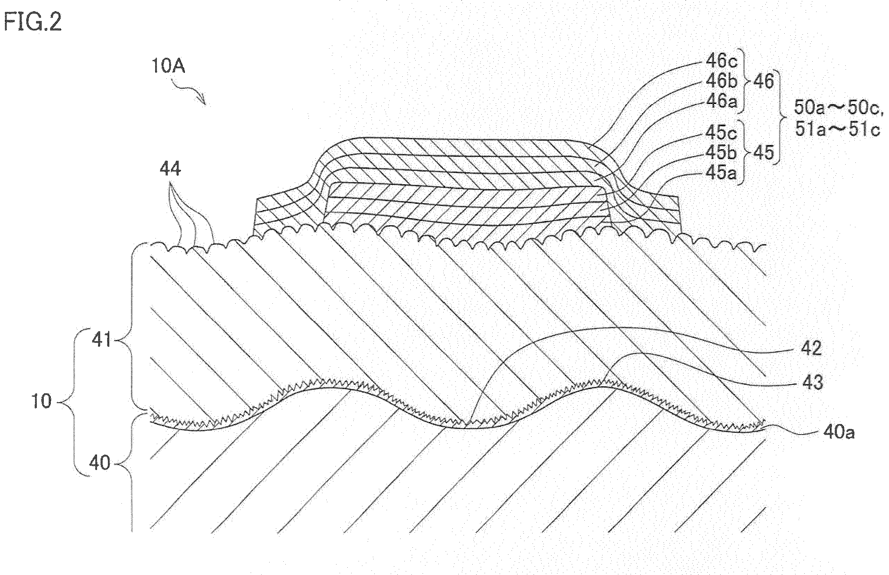

FIG. 2 is a diagram schematically illustrating the cross-section of the vehicular decorative wheel 10A. The vehicular wheel 10 includes a wheel main body 40 and a coating layer 41 formed on the surface of the wheel main body 40. That is, the decoration surface of the rim portion 11 is formed of the coating layer 41. The wheel main body 40 is formed by casting. The wheel main body 40 also includes, on its surface, a conversion coating film 40a formed by conversion coating. For the sake of convenience, the wheel main body 40 before the conversion coating is termed an untreated wheel main body. The untreated wheel main body is, for example, formed by casting aluminum alloy, magnesium alloy, or the like. Examples of the casting method include, but are not limited to, die casting, gravity casting, and sand mold casting. When gravity casting or sand mold casting is employed, the surface of the untreated wheel main body immediately after being taken out of the mold is rough for reasons such as solidification shrinkage which occurs in the casting. In the case of die casting, the degree of surface roughness due to the solidification shrinkage is small (gentle) as compared to gravity casting and sand mold casting. Irrespective of the casting method, at least a part of the surface of the untreated wheel main body is cut for dimension correction, after the wheel main body is taken out of the mold. For this reason, irrespective of the casting method, a surface roughness with an arithmetic average roughness Ra of about, for example, 0.2 to 5.0 µm is formed at least at a part of the surface of the untreated wheel main body.

Conversion coating is conducted for this untreated wheel main body by, for example, dipping the untreated wheel main body into a zirconium conversion coating solution. This causes a chemical reaction on the surface of the untreated wheel main body, with the result that the conversion coating film 40a is formed. The thickness of the conversion coating film 40a is very small as compared to the depth of each concavity (i.e., the height of each convexity) formed on at least a part of the surface of the untreated wheel main body. For this reason, at least a part of the wheel main body 40 on which the conversion coating film 40a is formed has a surface roughness (concavities 42 and convexities 43) formed in the same manner as on the surface of the untreated wheel main body. In the present embodiment, on the surface of the wheel main body 40, a decoration is provided in a region where the surface roughness (the concavities 42 and the convexities 43) is formed. Furthermore, due to the conversion coating, the surface of the wheel main body 40 (i.e., the surface of the conversion coating film 40a) is finely roughened (i.e., processed to be rough).

The coating layer 41 is formed by coating. The coating layer 41 is formed on the entire surface of the wheel main body 40. The coating layer 41 is formed of paint such as epoxy paint, acrylic paint, and melamine paint. The coating layer 41 may be formed by single coating or may be formed by coating at least twice with identical or different types of paint. At least a surface layer of the coating layer 41 is formed of black paint.

The coating layer 41 is in contact with not only the convexities 43 on the surface of the wheel main body 40 but also the concavities 42. Furthermore, because the coating layer 41 is formed by coating, the surface of the coating layer 41 is rough to a lesser extent than the surface roughness (the concavities 42 and the convexities 43) of the surface of the wheel main body 40. Since the surface roughness is gentle, adhesiveness with the decorated portions 50a to 50c and 51a to 51c can be attained. Rather, due to the surface roughness, the contact area between the coating layer 41 and the decorated portions 50a to 50c and 51a to 51c can be increased, which makes it possible to enhance adhesiveness between the coating layer 41 and the decorated portions 50a to 50c and 51a to 51c.

The coating layer 41 is formed by spraying, such as electrostatic coating or air spraying. By means of spraying, paint is sprayed in the form of fine particles such as liquid droplets. For this reason, protrusions 44 which are fine particles in shape are formed on the surface of the coating layer 41. Due to the protrusions 44, the contact area between the coating layer 41 and the decorated portions 50a to 50c and 51a to 51c is enlarged, and hence, the adhesiveness between the coating layer 41 and the decorated portions 50a to 50c and 51a to 51c is further enhanced.

The decorated portions 50a to 50c and 51a to 51c are formed on the surface of the coating layer 41. The decorated portions 50a to 50c and 51a to 51c are formed by ink such as polyurethane ink, acrylic ink, epoxy ink, and polyester ink. The decorated portions 50a to 50c and 51a to 51c are formed by laminating a colored ink layer 46 (color ink layer 46) on an ink layer 45 having white color (white ink layer 45). This is because, if only color ink is laminated on the black coating layer 41, ink coloring becomes poor. The color ink layer 46 entirely covers the surface of the white ink layer 45. The color ink layer 46 is in contact with the surface of the white ink layer 45 and a part of the surface of the coating layer 41. This can prevent the white ink from being exposed to the environment. The white ink layer 45 and the color ink layer 46 in the present embodiment each have a three-layer structure. The white ink layer 45 has first to third white ink layers 45a to 45c. The color ink layer 46 has first to third color ink layers 46a to 46c.

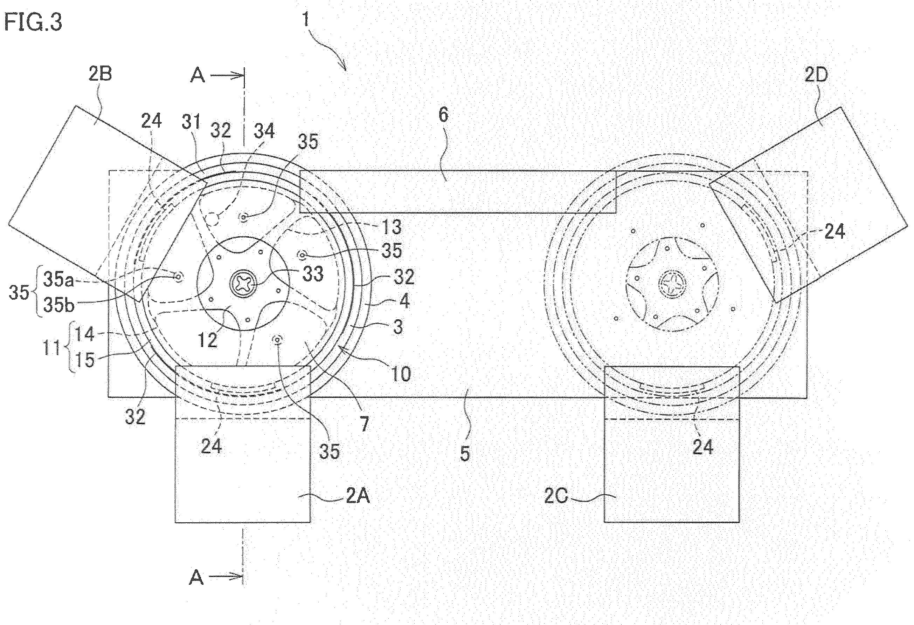

As illustrated in FIG. 3, the decorating device 1 includes four pad printing machines 2A to 2D, a fixing table 3 on which the vehicular wheel 10 is fixed, a rotation drive unit 4 that rotates the fixing table 3, a horizontal drive unit 5 that horizontally moves the rotation drive unit 4 and the fixing table 3, a drying device 6, a receiving plate 7, a control unit (not illustrated), and the like. As illustrated in FIG. 4, the rotation drive unit 4 is placed on the horizontal drive unit 5. The fixing table 3 is placed on the rotation drive unit 4. Note that the drying device 6 is not illustrated in FIG. 4.

The fixing table 3 includes a base 31, a plurality of support members 32, a center positioning member 33, and a circumferential direction positioning member 34. The base 31 is placed on the rotation drive unit 4. A plurality of the support members 32, the center positioning member 33, and the circumferential direction positioning member 34 are provided on the top surface of the base 31.

The base 31 is a horizontally-disposed disc-shaped member. The base 31 is fixed to a vertically extending rotating shaft (not illustrated) of the rotation drive unit 4. The base 31 is rotationally driven by the rotation drive unit 4. A plurality of the support members 32 are arranged in the circumferential direction of the base 31 about the rotation center. The side wall portion 15 of the rim portion 11 of the vehicular wheel 10 is placed on the top surfaces of a plurality of the support members 32.

The center positioning member 33 extends in the vertical direction from the rotation center of the base 31. The center positioning member 33 is inserted into the hub portion 12 of the vehicular wheel 10. Thus, the center of the vehicular wheel 10 is positioned with respect to the base 31.

The circumferential direction positioning member 34 is a columnar member. The circumferential direction positioning member 34 extends upward from the position closer to the center positioning member 33 than to the support members 32 on the base 31. The vehicular wheel 10 is positioned in the circumferential direction with respect to the base 31 by bringing the spoke portion 13 into contact with the circumferential direction positioning member 34.

A plurality of receiving plate mounting members 35 for mounting the receiving plate 7 are provided on the top surface of the base 31. A plurality of the receiving plate mounting members 35 are disposed at positions closer to the center positioning member 33 than to the support members 32. Each of the receiving plate mounting members 35 includes a receiving plate support rod 35a extending upward from the top surface of the base 31 and a pin 35b extending upward from the top surface of the receiving plate support rod 35a. The diameter of the pin 35b is smaller than the diameter of the receiving plate support rod 35a.

The receiving plate 7 is a doughnut-shaped plate member. The outer diameter of the receiving plate 7 is slightly smaller than the inner diameter of the side wall portion 15 of the rim portion 11. The receiving plate 7 is provided with a plurality of through-holes. The receiving plate 7 is placed on the top surfaces of the receiving plate support rods 35a so that the pins 35b of the receiving plate mounting members 35 insert into the corresponding through-holes of the receiving plate 7. Thus, the top surface of the receiving plate 7 is placed at the position slightly lower than the outer surface of the side wall portion 15 of the rim portion 11. The hub portion 12 is disposed inside of the central hole of the receiving plate 7. The receiving plate 7 functions to prevent a subsequently-described pad 24 from being shifted in the radial direction of the vehicular wheel 10 due to the contact between the pad 24 and the receiving plate 7, when the pad 24 is pressed onto the side wall portion 15 of the rim portion 11.

The rotation drive unit 4 has the rotating shaft (not illustrated) fixed to the fixing table 3 as described above. The rotation drive unit 4 rotates the fixing table 3 by rotating the rotating shaft by a drive source not illustrated. The rotation drive unit 4 is capable of rotating the fixing table 3 in both the forward direction and the reverse direction. The specific configuration of the drive source (not illustrated) for the rotation drive unit 4 is not particularly limiting. For example, the drive source may rotate the rotation axis with a motor.

The horizontal drive unit 5 reciprocates the rotation drive unit 4 and the fixing table 3 to reciprocate in the horizontal direction between a first printing position indicated by a solid line in FIG. 3 and a second printing position indicated by a two-dot-chain line in FIG. 3. The specific configuration of the horizontal drive unit 5 for moving the rotation drive unit 4 is not particularly limiting.

The two pad printing machines 2A and 2B out of four pad printing machines 2A to 2D are arranged in the rotation direction in which the rotation drive unit 4, disposed on the first printing position, rotates the fixing table 3. The remaining pad printing machines 2C and 2D are arranged in the rotation direction in which the rotation drive unit 4, disposed on the second printing position, rotates the fixing table 3. More specifically, the pad printing machines 2A and 2B are arranged at positions shifted by 120° about the rotation center around which the rotation drive unit 4, disposed on the first printing position, rotates the fixing table 3. Similarly, the pad printing machines 2C and 2D are arranged at positions shifted by 120°.

The pad printing machines 2A and 2B are used to form the decorated portions 50a to 50c composed of the character 52 on the outer surface (decoration area or decoration surface) of the side wall portion 15 of the rim portion 11 of the vehicular wheel 10. The pad printing machine 2A prints the character 52 with white ink, while the pad printing machine 2B prints the character 52 with color ink. The pad printing machines 2C and 2D are used to form decorated portions 51a to 51c composed of the line 53 on the rim portion 11 of the vehicular wheel 10. The pad printing machine 2C prints the line 53 with white ink, while the pad printing machine 2D prints the line 53 with color ink.

The configurations of the four pad printing machines 2A to 2D are substantially the same. As illustrated in FIG. 4, the pad printing machines 2A to 2D respectively include a forme plate 21, an ink application portion 22, an ink application portion moving unit 23, the pad 24, a pad moving unit 25, drying units 26, 27, and the like. The ink application portion 22 is configured to apply ink onto the forme plate 21. The ink application portion moving unit 23 is configured to move the ink application portion 22. The pad moving unit 25 is configured to move the pad 24.

The forme plate 21 is an intaglio having the groove of the character 52 or the line 53 printed on the top surface thereof. The ink application portion 22 is provided above the forme plate 21. The ink application portion moving unit 23 reciprocates the ink application portion 22 in the horizontal direction. The ink application portion 22 supplies ink onto the forme plate 21 when moving on the forme plate 21 in a predetermined direction, while scraping excess ink overflowing from the groove on the forme plate 21 when moving in the reverse direction.

The pad moving unit 25 has a pad fixing jig 25a on which the pad 24 is attached. The pad 24 is detachably fixed to the lower end of the pad fixing jig 25a. The pad moving unit 25 reciprocates the pad 24 in the horizontal direction between the forme plate 21 and the rim portion 11 of the vehicular wheel 10. In addition, the pad moving unit 25 moves the pad 24 in the up-down direction above the forme plate 21 and the rim portion 11 of the vehicular wheel 10. The pad 24 is pressed vertically downward onto the forme plate 21 and the rim portion 11.

The pad 24 is formed from an elastically deformable material such as a silicon, rubber or polyurethane. The pad 24 is formed into an arc shape having a curvature substantially the same as the curvature of the side wall portion 15 of the rim portion 11 when viewed in the up-down direction. The lower surface 24a of the pad 24 is formed into an arc shape on a cross-section orthogonal to the circumferential direction of the rim portion 11. The circumferential length of the pad 24 is slightly longer than the circumferential length of the character 52 or the line 53.

When the lower surface 24a (transfer surface) of the pad 24 is pressed onto the forme plate 21 onto which ink is applied, the ink on the forme plate 21 is transferred onto the lower surface 24a of the pad 24. When the lower surface 24a of the pad 24 is pressed onto the outer surface of the side wall portion 15 of the rim portion 11 of the vehicular wheel 10, the ink adhering to the lower surface 24a of the pad 24 is re-transferred to the rim portion 11, whereby the character 52 or the line 53 is printed on the rim portion 11.

The drying unit 26 blows air to the lower surface 24a of the pad 24 to dry the ink adhered to the lower surface 24a of the pad 24, when the pad 24 is moved from the forme plate 21 to the rim portion 11 in the horizontal direction. The viscosity of the ink is increased by drying the ink adhered to the pad 24, and thus, the ink is easy to be adhered (transferred) onto the rim portion 11 when the pad 24 is pressed onto the rim portion 11.

The drying unit 27 blows air to the portion of the rim portion 11 where the ink is adhered to dry the ink adhered to the rim portion 11, after the pad 24, having the ink adhered thereto, is pressed onto the rim portion 11 and then separated therefrom. The decorating device 1 applies ink of the same color more than once for enhancing appearance and resistance to weather. In view of this, the ink transferred onto the rim portion 11 is dried to some extent by the drying unit 27, and then the ink is laminated thereon. This prevents the outline of the character 52 or the line 53 from blurring or losing its shape.

The pad printing machines 2A to 2D also include a pad cleaning portion (not illustrated) for removing ink remaining on the lower surface 24a of the pad 24 after transferring ink onto the rim portion 11. The pad cleaning portion executes cleaning every time ink is transferred to the rim portion 11 from the pad 24 one time to several times.

The drying device 6 blows air to the side wall portion 15 of the rim portion 11 of the vehicular wheel 10 when the rotation drive unit 4, the fixing table 3, and the vehicular wheel 10 are moved to the second printing position from the first printing position by the horizontal drive unit 5. The drying device 6 is configured to be capable of blowing air to the entire outer surface of the side wall portion 15 of the rim portion 11. The drying device 6 dries the ink on three decorated portions 50a to 50c formed by the pad printing machines 2A and 2B. Since the ink on the decorated portions 50a to 50c is dried to some extent by the drying device 6, even if the pad 24 of the pad printing machine 2C, 2D is in contact with a part of the decorated portions 50a to 50c in decorating the vehicular wheel 10 in the second printing position, loss of shape of the decorated portions 50a to 50c can be prevented.

The control unit (not illustrated) is configured to control the operations of the pad printing machines 2A to 2D, the rotation drive unit 4, the horizontal drive unit 5, and the drying device 6. The control unit includes a CPU (Central Processing Unit), a ROM (Read Only Memory), a RAM (Random Access memory), and the like. The control unit executes various processes by the CPU according to data or programs stored in the RAM or the ROM to form the decorated portions 50a to 50c and 51a to 51c on the outer surface of the side wall portion 15 of the rim portion 11 of the vehicular wheel 10.

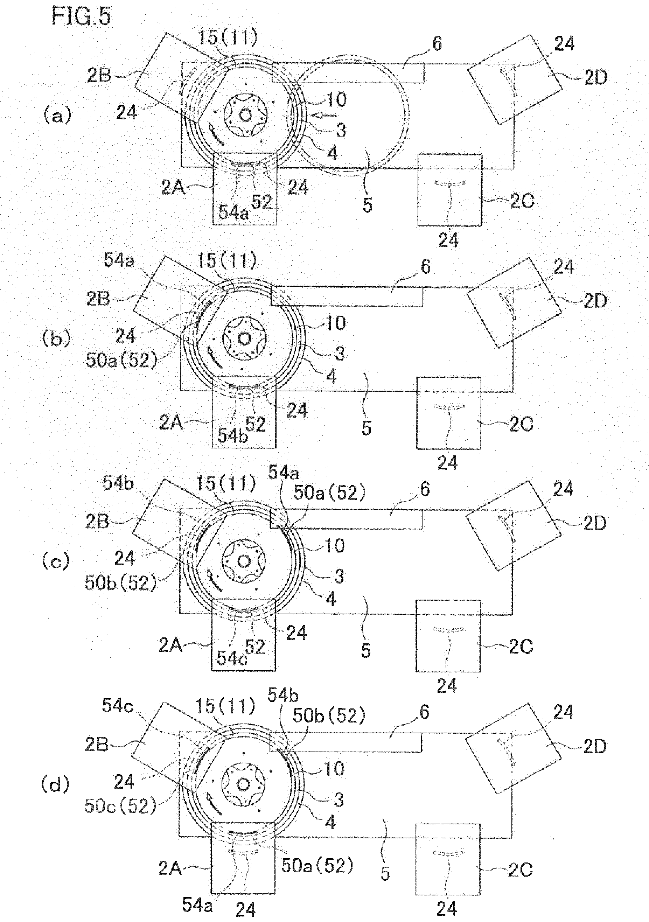

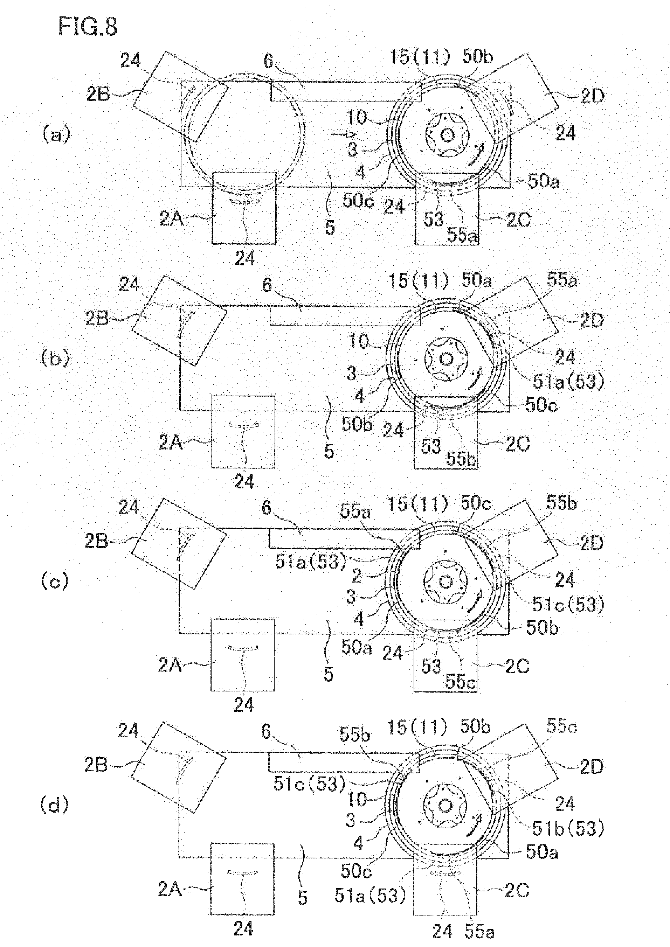

The procedure for decorating the vehicular wheel 10 by the decorating device 1 is described with reference to FIGS. 5(a) to (d), 6, 7, and 8(a) to (d). Note that, in FIGS. 5(a) to (d) and 8(a) to (d), a white character 52 or line 53 is indicated by a framed arc, and a color character 52 or line 53 is indicated by a bold arc line.

Firstly, as indicated by a two-dot-chain line in FIG. 5(a), the rotation drive unit 4 and the fixing table 3 are located at the intermediate position between the first printing position and the second printing position. In this state, the vehicular wheel 10 is fixed to the fixing table 3 (fixing process). Then, the receiving plate 7 is attached to the fixing table 3. Thereafter, as indicated by a solid line in FIG. 5(a), the rotation drive unit 4, the fixing table 3, and the vehicular wheel 10 are moved to the first printing position by the horizontal drive unit 5.

Further, white ink is applied onto the forme plate 21 by the pad printing machine 2A. Then, the pad 24 is pressed onto this forme plate 21 and ink is adhered to the lower surface 24a (transfer surface) of the pad 24 (first adhering process).

Next, the pad 24 is moved upward to be separated from the forme plate 21. Thereafter, the pad 24 is horizontally moved to be located in the position (hereinafter referred to as a printing preparation position) above the rim portion 11 of the vehicular wheel 10 in the first printing position. Then, the lower surface 24a (transfer surface) of the pad 24 of the pad printing machine 2A is pressed onto the decoration position 54a on the outer surface of the side wall portion 15 of the rim portion 11 of the vehicular wheel 10 by moving the pad 24 downward from the printing preparation position. Therefore the character 52 is printed onto the decoration position 54a on the rim portion 11 with white ink.

The process after the pad 24 is moved from the position where the pad 24 is in contact with the forme plate 21 until the lower surface 24a of the pad 24 is brought into contact with the decoration position 54a on the outer surface (decoration surface) of the side wall portion 15 of the rim portion 11 is defined as a contact process. In the contact process, the pad 24 is not elastically deformed. The process for pressing the lower surface 24a of the pad 24, which has been in contact with the decoration position 54a of the rim portion 11 in the contact process, onto the rim portion 11 by the movement of the pad fixing jig 25a toward the decoration position 54a to decorate the decoration position 54a on the rim portion 11 is defined as a pressing process. In the pressing process, the pad 24 is elastically deformed. It should be noted that the definition of the contact process and the pressing process described above is not limited to the case for decorating the decoration position 54a. It is also applied to the case for decorating the decoration positions 54b, 54c, 55a, and 55b.

Notably, the pressing process in the embodiment in Japanese Patent Application No. 2014-123695 which is the base application of the present application includes the pressing process and a part of the contact process in the specification of the present application. The pressing process in the embodiment in Japanese Patent Application No. 2014-123695 moves the pad 24 downward from the printing preparation position and presses the pad 24 onto the rim portion 11.

The pad printing machine 2A applies ink onto the forme plate 21 after separating the pad 24 from the forme plate 21. After the first pressing process, the pad 24 is separated from the rim portion 11 and moved to the position above the forme plate 21. The process for moving the pad 24 to the position above the forme plate 21 from the position where it is in contact with the rim portion 11 is defined as a pad returning process. Then, the pad 24 is pressed onto the forme plate 21, onto which ink is applied, to apply ink onto the lower surface 24a of the pad 24 (second adhering process).

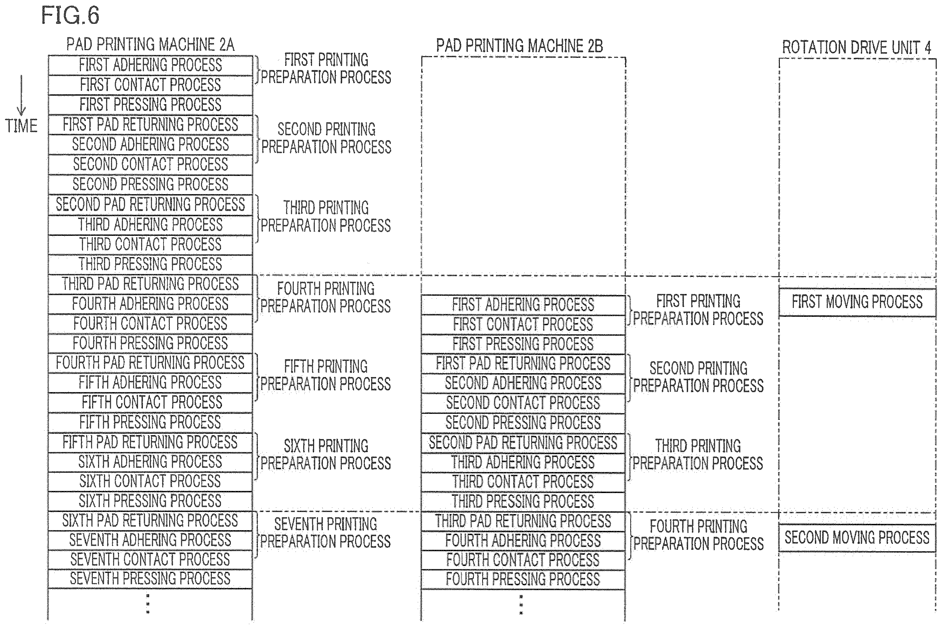

Next, the pad 24 is moved to the printing preparation position, and then, moved downward to bring the lower surface 24a of the pad 24 into contact with the decoration position 54a (second contact process). Then, white ink is printed on the decoration position 54a by pressing the lower surface 24a of the pad 24 onto the decoration position 54a (second pressing process). As illustrated in FIG. 6, the second pad returning process, the third adhering process, the third contact process, and the third pressing process are performed in this order after the second pressing process. In this way, white ink is applied three times in layers on the decoration position 54a, and thus, the white character 52 is printed on the decoration position 54a.

Notably, the adhering process and the process for moving the pad 24 to the printing preparation position from the position where the pad 24 is in contact with the forme plate 21 are collectively defined as a printing preparation process. That is, the printing preparation process includes the adhering process and a part of the contact process. Further, the second and subsequent printing preparation processes include the pad returning process. The definition of the printing preparation process is the same as the definition of the printing preparation process in the embodiment in Japanese Patent Application No. 2014-123695 which is the base application of the present application.

After the third pressing process by the pad printing machine 2A, the fourth adhering process and the fourth contact process by the pad printing machine 2A are performed, and at the same time, the first adhering process and the first contact process by the pad printing machine 2B are performed. Further, after the third pressing process by the pad printing machine 2A, the fixing table 3 and the vehicular wheel 10 are rotated by 120° by the rotation drive unit 4 (first moving process) with the vehicular wheel 10 being fixed to the fixing table 3 as illustrated in FIG. 5(b). Specifically, the vehicular wheel 10 makes a relative movement in the circumferential direction on a plane (horizontal plane) orthogonal to the pressing direction (vertical downward direction) of the pad 24 with respect to the pad printing machines 2A and 2B. In other words, the vehicular wheel 10 moves in the circumferential direction of the outer surface of the side wall portion 15 (in the longitudinal direction of the decoration surface) relative to the position of the pad 24 pressed onto the rim portion 11. The distance of the movement of the rim portion 11 is the same as the distance between the center of the decoration position 54a in the circumferential direction and the center of the decoration position 54b in the circumferential direction.

It is preferable that at least a part of the moving process be performed simultaneously with at least one of the pad returning process, the adhering process, and a part of the contact process. In this way, the operation time can be reduced. In the case where the moving process is ended before the contact process is ended as illustrated in FIG. 6, the drying unit 27 in the pad printing machine 2B is preferably driven to dry the ink printed on the rim portion 11. In the present embodiment, the moving process is performed simultaneously with a part of the pad returning process and a part of the adhering process.

After the first moving process, the fourth contact process and the fourth pressing process by the pad printing machine 2A are performed, and the first contact process and the first pressing process by the pad printing machine 2B are performed. Thus, the pad printing machine 2A prints the character 52 on the decoration position 54b on the rim portion 11 with white ink. Further, the pad printing machine 2B prints the character 52 with color ink on the portion (decoration position 54a) on which white ink is printed by the pad printing machine 2A. The time at which the pad 24 of the pad printing machine 2A is pressed onto the rim portion 11 and the time at which the pad 24 of the pad printing machine 2B is pressed onto the rim portion 11 are the same. Then, a series of processes including the pad returning process, the adhering process, the contact process, and the pressing process is repeated twice by each of the pad printing machine 2A and the pad printing machine 2B. Accordingly, the decorated portion 50a (color character 52) is formed on the decoration position 54a, and the white character 52 is printed on the decoration position 54b.

After the sixth pressing process by the pad printing machine 2A (that is, after the third pressing process by the pad printing machine 2B), the sixth pad returning process and the seventh adhering process by the pad printing machine 2A are performed, and at the same time, the third pad returning process and the fourth adhering process by the pad printing machine 2B are performed. Further, after the sixth pressing process by the pad printing machine 2A, the fixing table 3 and the vehicular wheel 10 are rotated by 120° by the rotation drive unit 4 (second moving process) with the vehicular wheel 10 being fixed to the fixing table 3 as illustrated in FIG. 5(c). As in the first moving process, at least a part of the second moving process is performed simultaneously with the pad returning process and the adhering process.

After the second moving process, the seventh contact process and the seventh pressing process by the pad printing machine 2A are performed, and at the same time, the fourth contact process and the fourth pressing process by the pad printing machine 2B are performed. Then, a series of processes including the pad returning process, the adhering process, the contact process, and the pressing process is repeated twice by each of the pad printing machine 2A and the pad printing machine 2B. Accordingly, the decorated portion 50b (color character 52) is formed on the decoration position 54b, and the white character 52 is printed on the decoration position 54c.

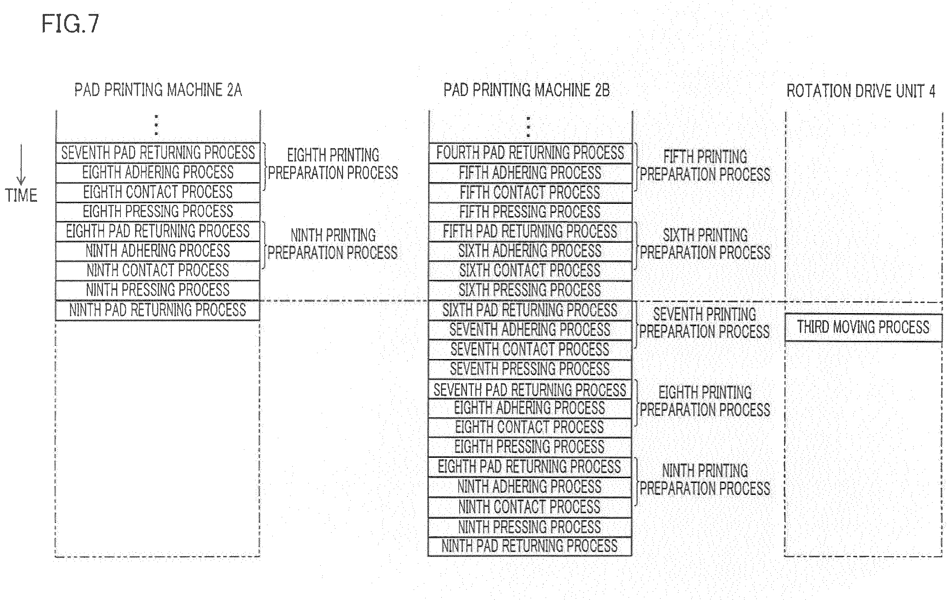

As illustrated in FIG. 7, after the sixth pressing process by the pad printing machine 2B (that is, after the ninth pressing process by the pad printing machine 2A), the sixth pad returning process and the seventh adhering process by the pad printing machine 2B are performed. Further, after the sixth pressing process by the pad printing machine 2B, the fixing table 3 and the vehicular wheel 10 are further rotated by 120° by the rotation drive unit 4 (third moving process) with the vehicular wheel 10 being fixed to the fixing table 3 as illustrated in FIG. 5(d). As in the first and second moving processes, at least a part of the third moving process is performed simultaneously with the pad returning process and the adhering process by the pad printing machine 2B.

After the third moving process, the seventh contact process and the seventh pressing process by the pad printing machine 2B are performed. Then, a series of processes including the pad returning process, the adhering process, the contact process, and the pressing process is repeated twice by the pad printing machine 2B. Thus, the decorated portion 50c is formed on the decoration position 54c on the rim portion.

In this way, the area, which is longer than the maximum length (the length of a line segment joining both ends in the circumferential direction) of each pad 24, on the rim portion 11 of the vehicular wheel 10 is decorated by the pad 24 of each of the pad printing machines 2A and 2B. The area to be decorated by each pad 24 is longer than the length of the pad 24 in the circumferential direction (the direction of rotation by the rotation drive unit 4). Specifically, the area to be decorated by each pad 24 is about three times as long as the circumferential length of the pad 24.

Subsequently, as illustrated in FIG. 8(a), the rotation drive unit 4, the fixing table 3, and the vehicular wheel 10 are moved to the second printing position from the first printing position by the horizontal drive unit 5. During this movement, the drying device 6 blows air to the entire outer surface of the side wall portion 15 of the rim portion 11 to dry the ink on the three decorated portions 50a to 50c. Notably, the fixing table 3 and the vehicular wheel 10 may be rotated by the rotation drive unit 4 during the horizontal movement by the horizontal drive unit 5 in order to uniformly blow air in the circumferential direction.

As illustrated in FIG. 8(a), the fixing table 3 and the vehicular wheel 10 are rotated by the rotation drive unit 4 by a predetermined angle such that the position on the rim portion 11 where the decorated portion 51a (or 51b or 51c) is to be formed is aligned with the printing position by the pad printing machine 2C. Then, as illustrated in FIGS. 8(a) to 8(d), the decorated portions 51a to 51c are formed by the pad printing machines 2C and 2D in a similar was as when forming the decorated portions 50a to 50c by the pad printing machines 2A and 2B. After the decorated portions 51a to 51c are formed, the rotation drive unit 4 and the fixing table 3 are moved to the intermediate position between the first printing position and the second printing position, and the receiving plate 7 and the vehicular wheel 10 are removed from the fixing table 3.

The decorated portions 50a to 50c (51a to 51c) having the same pattern are arranged on the outer surface (decoration surface) of the side wall portion 15 of the rim portion 11 of the vehicular decorative wheel 10Aaccording to the present embodiment in the circumferential direction of the rim portion 11. The decorated portions 50a to 50c (51a to 51c) are formed by a decoration technology for directly applying ink on the decoration surface of the rim portion 11, that is, by printing. The decorated portions 50a to 50c (51a to 51c) include a pattern having a non-uniform length in a direction orthogonal to the circumferential direction of the rim portion 11. The pattern described above may not be formed by painting a groove for decoration, coating using a masking, or attaching stickers. Even if it is possible, much time is required, and therefore, productivity deteriorates. On the other hand, the decorated portions 50a to 50c (51a to 51c) in the present embodiment are formed by printing, and thus, a degree of freedom in decoration and productivity can be enhanced. Therefore, the present embodiment implements the vehicular decorative wheel 10A that includes the rim portion 11, on which the decorated portions 50a to 50c and 51a to 51c are formed, and that can be manufactured while maintaining high productivity even with a high degree of freedom in decoration.

The vehicular decorative wheel 10A is decorated by pad printing. The pad printing is a printing technology in which ink is transferred onto a pad from a plate, and then, the pad is pressed onto an object to be decorated to perform printing (decoration). Therefore, as compared with painting a groove for decoration, coating using a masking, and attaching sticker, the degree of freedom in decoration and productivity can further be improved.

Further, in the present embodiment, the area, which is longer than the maximum length of the transfer surface 24a of the pad 24, on the outer surface (decoration surface) on the side wall portion 15 of the rim portion 11 of the vehicular wheel 10 is decorated by the pad 24. Accordingly, the size of the pad 24 may be small, even if the circumferential length of the outer surface (decoration surface) of the side wall portion 15 of the rim portion 11 is long. Since the size of the pad 24 is small, uniformity in pressure for pressing the pad 24 onto the vehicular wheel 10 is easy to attain. Accordingly, even a complex design can be printed with high precision, whereby the degree of freedom in decoration can further be improved.

The decorated portion 50a (the first decorated portion in the present teaching) and the decorated portion 51a (the fourth decorated portion in the present teaching) are arranged in the circumferential direction of the rim portion 11 with a space therebetween. Therefore, printing misalignment between the decorated portion 50a and the decorated portion 51a is less visible as compared with the case where the decorated portion 50a and the decorated portion 51a partly overlap with each other or the case where the end of the decorated portion 50a and the end of the decorated portion 51b are located in the same position. Accordingly, even if the decorated portion 50a or the decorated portion 51a is slightly shifted, this hardly causes a defect, and thus, productivity can be improved.

In the present embodiment, the pad 24 is pressed onto the outer surface of the side wall portion 15 of the rim portion 11 in the vertical downward direction. However, the pad 24 may be pressed in the direction diagonal to the up-down direction. This modification can be implemented by placing the pad printing machines 2A to 2D on a table inclined with respect to a horizontal plane, for example.

### <Second Embodiment>

Next, a second embodiment of the present teaching is described. The components having a similar configuration to the first embodiment are identified by the same reference signs, and the description thereof is omitted as appropriate. The description for the vehicular wheel 10, which is an object to be decorated, for a motorcycle, is the same as that in the first embodiment, and thus, it is omitted.

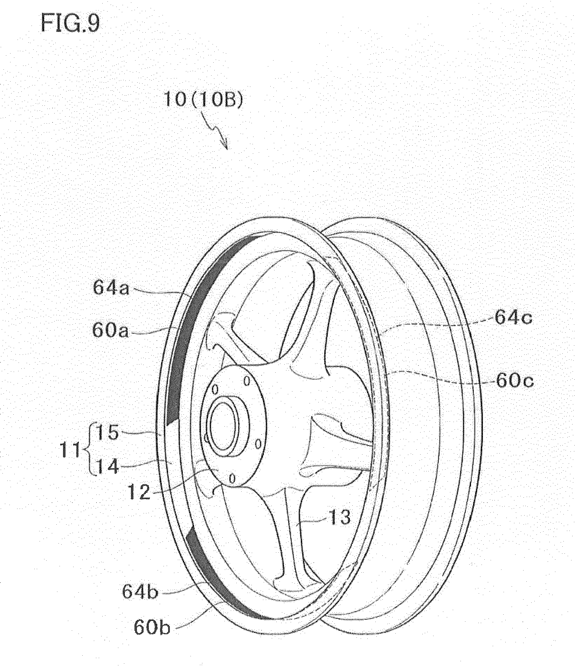

FIG. 9 illustrates a vehicular wheel 10B (hereinafter referred to as a vehicular decorative wheel 10B) decorated by a subsequently-described decorating device 101 according to the present embodiment. The decorating device 101, the detail of which is described below, decorates the vehicular wheel 10 by pad printing. That is, the vehicular decorative wheel 10B is decorated by pad printing.

Decorated portions 60a to 60c which are arranged in the circumferential direction are formed at the axial end portions of an inner circumferential surface of a bottom wall portion 14 of a rim portion 11 of the vehicular decorative wheel 10B. The positions where the decorated portions 60a to 60c are formed on the rim portion 11 of the vehicular wheel 10 are defined as decoration positions 64a to 64c. In the present embodiment, the entire circumferential area at the axial end portion of the inner circumferential surface of the bottom wall portion 14 of the rim portion 11 of the vehicular wheel 10 corresponds to a decoration surface according to the present teaching.

Each of the decorated portions 60a to 60c is composed of a line 61. The decorated portions 60a to 60c are arranged with a pitch of 120°. The decorated portions 60a to 60c are spaced in the circumferential direction of the rim portion 11. In the present embodiment, the circumferential length of each of the decorated portions 60a to 60c corresponds to an angular range of about 90° at the axial end portion of the inner circumferential surface of the bottom wall portion 14 of the rim portion 11. However, it is not limited thereto.

Both ends of the decorated portions 60a to 60c (line 61) in the circumferential direction are tilted with respect to the direction parallel to the central axis of the rim portion 11 (the direction orthogonal to the circumferential direction of the rim portion 11). Thus, the length of each of the decorated portions 60a to 60c (line 61) in the direction parallel to the central axis of the rim portion 11 (the direction orthogonal to the circumferential direction of the rim portion 11) is not uniform in the circumferential direction of the rim portion 11.

The decorated portions 60a to 60c have a color different to white and black. The decorated portions 60a to 60c have the same color. The decorated portions 60a to 60c are formed of ink. The decorated portions 60a to 60c are formed by laminating a colored ink layer on an ink layer having white color. This is because, when only color ink is laminated on the black coating layer 41 (see FIG. 2), ink coloring becomes poor. While not illustrated, the color ink layer is in contact with the surface of the white ink layer and a part of the surface (surface of the coating layer 41) of the vehicular wheel 10 as in the first embodiment.

In general, the solvent content contained in ink varies according to a color of ink. Ink used in the present embodiment has higher solvent content than the ink of the same color used in the first embodiment. Therefore, the thickness of ink applied to the object to be decorated by one pad printing is greater than that in the first embodiment. In the first embodiment, ink of the same color is applied more than once in layers for enhancing appearance and resistance to weather. On the other hand, in the present embodiment, ink of a single color is printed on one portion only once. That is, the decorated portions 60a to 60c are formed by two applications of ink, that is, application of white ink and application of color ink. The thickness of ink applied by one printing is large, and thus, resistance to weather and appearance of the decorated portions 60a to 60c can be achieved, although the decorated portions 60a to 60c are formed by applying white ink and color ink each only once. The decorated portions 60a to 60c correspond to a first decorated portion, a second decorated portion, and a third decorated portion in the present teaching.

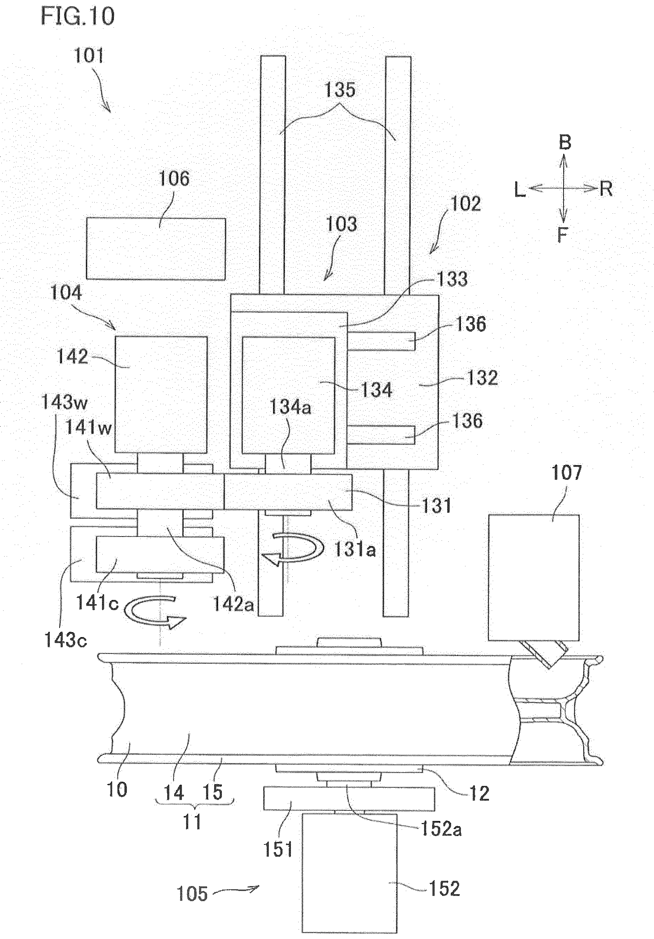

As illustrated in FIG. 10, the decorating device 101 includes a pad printing machine 102, a wheel moving mechanism 105, a pad cleaner portion 106, a drying device 107, a control unit (not illustrated), and the like. In each diagram in the second embodiment, an arrow F indicates front, an arrow B indicates back, an arrow R indicates right, and an arrow L indicates left. The decorating device 101 is described below by using the directions of front, back, left, and right indicated in each diagram.

The wheel moving mechanism 105 includes a support member 151 and a wheel drive motor 152. The wheel drive motor 152 is connected to a wheel fixing shaft 152a. The wheel fixing shaft 152a is supported by the support member 151 so as to be rotatable. The wheel fixing shaft 152a extends in the front-back direction (horizontal direction).

The wheel fixing shaft 152a is inserted into the hub portion 12 of the vehicular wheel 10. The vehicular wheel 10 is fixed to the wheel fixing shaft 152a so as to be detachable. The vehicular wheel 10 is positioned relative to the wheel fixing shaft 152a. When the wheel drive motor 152 is activated with the vehicular wheel 10 being fixed to the wheel fixing shaft 152a, the vehicular wheel 10 is driven to rotate in the clockwise direction as viewed from back. Notably, the wheel moving mechanism 105 may be configured such that the support member 151 is placed on a base that is movable in the left-right direction. This configuration facilitates the attachment/removal of the vehicular wheel 10.

The pad printing machine 102 is placed at the rear of the wheel moving mechanism 105. The pad printing machine 102 includes a pad mounting portion 103 to which a pad 131 is mounted, and a forme roll mounting portion 104 to which two forme rolls 141w and 141c are mounted. The pad mounting portion 103 includes a pad 131, a front-back slide table 132, a left-right slide table 133, and a pad drive motor 134.

The front-back slide table 132 is mounted on a rail 135 extending in the front-back direction so as to be movable in the front-back direction. The front-back slide table 132 is driven in the front-back direction by a drive source not illustrated. The drive source is controlled by the control unit in the decorating device 101. Note that the drive source may not be provided, and an operator may manually move the front-back slide table 132 in the front-back direction.

A rail 136 extending in the left-right direction is provided on the top surface of the front-back slide table 132. The left-right slide table 133 is placed on the rail 136 so as to be movable in the left-right direction. The left-right slide table 133 is driven in the left-right direction by a drive source not illustrated. The drive source is controlled by the control unit in the decorating device 101. Note that the drive source may not be provided, and an operator may manually move the left-right slide table 133 in the left-right direction.

The pad drive motor 134 is placed on the left-right slide table 133 and moves integrally with the left-right slide table 133. The pad drive motor 134 is connected to a pad fixing shaft 134a extending in the front-back direction. The pad fixing shaft 134a is provided parallel to the wheel fixing shaft 152a. The pad drive motor 134 (and pad fixing shaft 134a) is movable in the up-down direction by a not-illustrated up-down moving mechanism of the pad mounting portion 103. The up-down moving mechanism may be configured to move both the pad drive motor 134 and the left-right slide table 133 or to move the pad drive motor 134 relative to the slide table 133. The up-down moving mechanism may be controlled by the control unit in the decorating device 101 or may be manually operated.

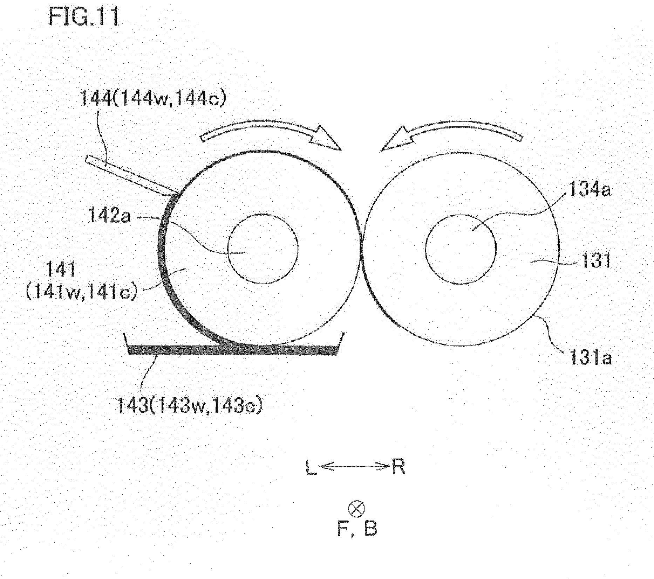

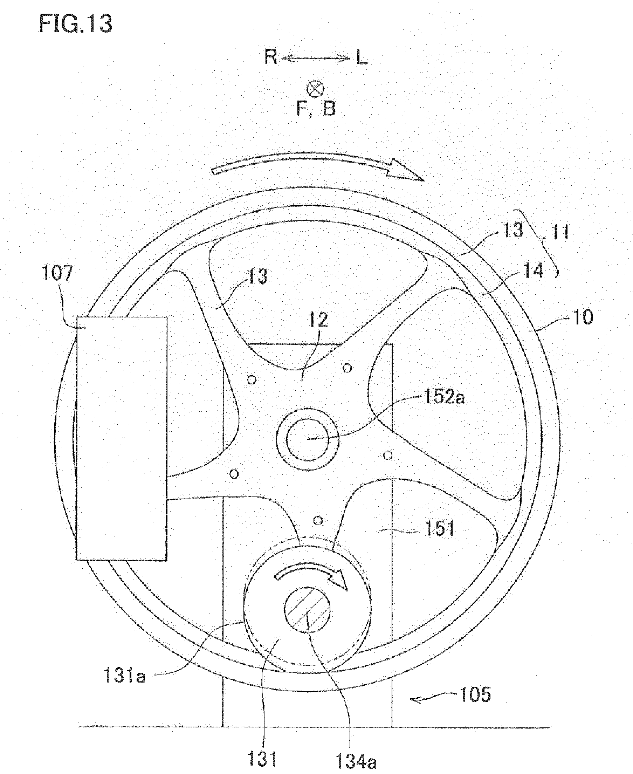

As illustrated in FIG. 11, the pad 131 is formed into a cylindrical shape. An outer circumferential surface 131a of the pad 131 has a circular cross-section. The pad fixing shaft 134a is inserted into a center hole of the pad 131. The pad 131 is detachably fixed to the pad fixing shaft 134a (pad fixing jig). The central axis of the rim portion 11 of the vehicular wheel 10 fixed to the wheel fixing shaft 152a extends in the direction of the central axis of the outer circumferential surface 131a of the pad 131 fixed to the pad fixing shaft 134a. As illustrated in FIG. 13, the pad 131 fixed to the pad fixing shaft 134a is on the same level as the substantially center of the vehicular wheel 10 fixed to the wheel fixing shaft 152a in the up-down direction. The pad 131 is rotated in the counterclockwise direction as viewed from front by activating the pad drive motor 134. That is, the rotation direction in which the pad drive motor 134 rotates the pad 131 and the rotation direction in which the wheel drive motor 152 rotates the vehicular wheel 10 are the same.

The pad 131 is formed from an elastically deformable material such as a silicon, rubber or polyurethane. The pad 131 is softer than the pad 24 in the first embodiment and has a smaller Young's modulus than the pad 24. The outer diameter of the pad 131 is constant in the cylindrical axis direction of the pad 131. The outer diameter of the pad 131 is smaller than the radial length of the space between the axial end portion (decoration surface) of the inner circumferential surface of the bottom wall portion 14 of the rim portion 11 of the vehicular wheel 10 and the outer circumferential surface of the hub portion 12. The circumferential length of the outer circumferential surface 131a of the pad 131 is slightly longer than the circumferential length of the decorated portions 60a to 60c.

As illustrated in FIG. 10, the forme roll mounting portion 104 is provided at the left of the pad mounting portion 103. The forme roll mounting portion 104 includes two forme rolls 141w and 141c, a forme roll drive motor 142, two ink trays 143w and 143c, and two squeegees 144w and 144c (see FIG. 11). In the description below, the forme rolls 141w and 141c may be collectively referred to as a forme roll 141 in some cases. Further, the ink trays 143w and 143c may be collectively referred to as an ink tray 143 in some cases. Further, the squeegees 144w and 144c may be collectively referred to as a squeegee 144 in some cases.

The forme roll drive motor 142 is connected to a forme roll fixing shaft 142a extending in the front-back direction. The forme rolls 141w and 141c are formed into a cylindrical shape. The forme roll fixing shaft 142a is inserted into the center holes of the forme rolls 141w and 141c. The forme roll fixing shaft 142a is fixed to the forme rolls 141w and 141c. The forme rolls 141w and 141c are rotated in the direction opposite to the pad 131 (clockwise direction as viewed from front) by activating the forme roll drive motor 142.

The forme rolls 141w and 141c are intaglios having a groove of the line 61 printed on the outer circumferential surface thereof. The groove of the same shape is formed on the forme rolls 141w and 141c. The outer diameter of each of the forme rolls 141w and 141c in the present embodiment is the same as the outer diameter of the pad 131. However, it may be different therefrom.

The ink trays 143w and 143c are provided below the forme rolls 141w and 141c respectively. The ink trays 143w and 143c are supplied with ink of different colors. In the present embodiment, color ink is supplied to the front ink tray 143c, while white ink is supplied to the rear ink tray 143w. As illustrated in FIG. 11, the lowermost ends of the forme rolls 141w and 141c are in contact with ink in the ink trays 143w and 143c. The squeezes 144w and 144c are provided at an upper left position of the forme rolls 141w and 141c respectively. The tips of the squeegees 144w and 144c are in contact with the outer circumferential surfaces of the forme rolls 141w and 141c respectively.

As illustrated in FIGS. 10, 11, and 15, the pad drive motor 134 and the forme roll drive motor 142 are activated to rotate the pad 131 and the forme roll 141 at the same speed with the outer circumferential surface 131a (transfer surface) of the pad 131 being in contact with the outer circumferential surface of the forme roll 141. Thus, ink adhered to the forme roll 141 from the ink tray 143 is moved upward with the rotation of the forme roll 141. Excess ink overflowing from the groove on the forme roll 141 is scraped by the squeegee 144. Then, the ink in the groove on the forme roll 141 is adhered (transferred) onto the outer circumferential surface 131a of the pad 131 at the portion where the forme roll 141 and the pad 131 are in contact with each other. In the present embodiment, ink is adhered to the front portion of the outer circumferential surface 131a of the pad 131.

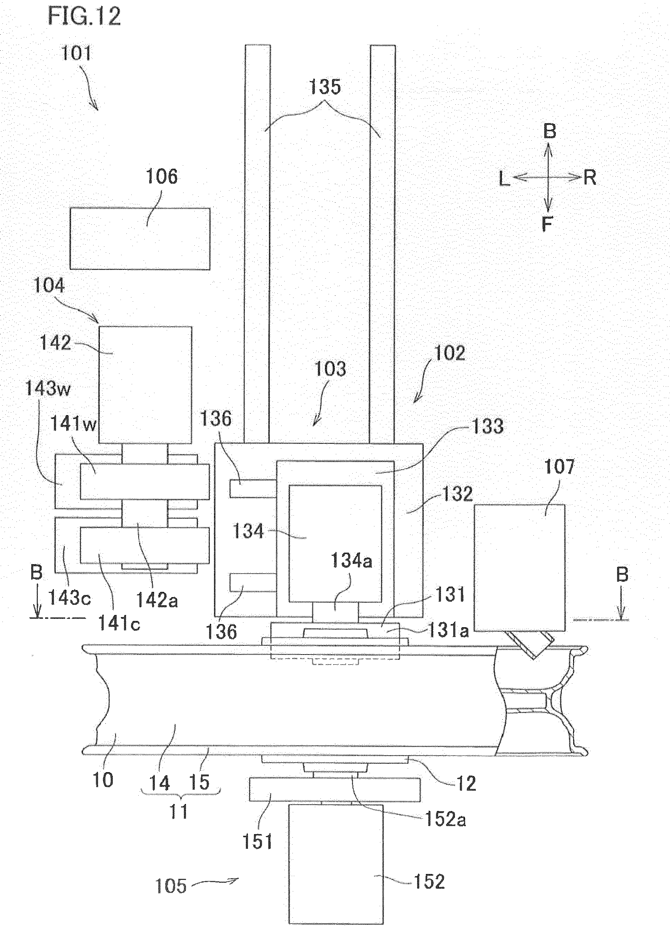

After ink has adhered to the outer circumferential surface 131a of the pad 131 from the forme roll 141, the front portion of the pad 131 is placed inside of the rim portion 11 of the vehicular wheel 10 by moving the front-back slide table 132 and the left-right slide table 133 as illustrated in FIG. 12. More specifically, the pad 131 is placed inside of the rim portion 11 and below the hub portion 12. Then, as illustrated in FIG. 13, the pad 131 is moved downward by the not-illustrated up-down moving mechanism of the pad mounting portion 103. The lower end at the front portion of the outer circumferential surface 131a of the pad 131 is pressed onto the axial end portion (decoration surface) of the inner circumferential surface of the bottom wall portion 14 of the rim portion 11. Next, the pad 131 and the vehicular wheel 10 are rotated by activating the pad drive motor 134 and the wheel drive motor 152. More specifically, the pad 131 and the vehicular wheel 10 are rotated in such a manner that the distance of movement of the outer circumferential surface 131a of the pad 131 per time unit and the distance of movement of the axial end portion (decoration surface) of the inner circumferential surface of the bottom wall portion 14 of the rim portion 11 of the vehicular wheel 10 per time unit are substantially the same. Thus, the ink adhered to the outer circumferential surface 131a of the pad 131 is re-transferred to the rim portion 11, whereby the line 61 is printed on the rim portion 11.

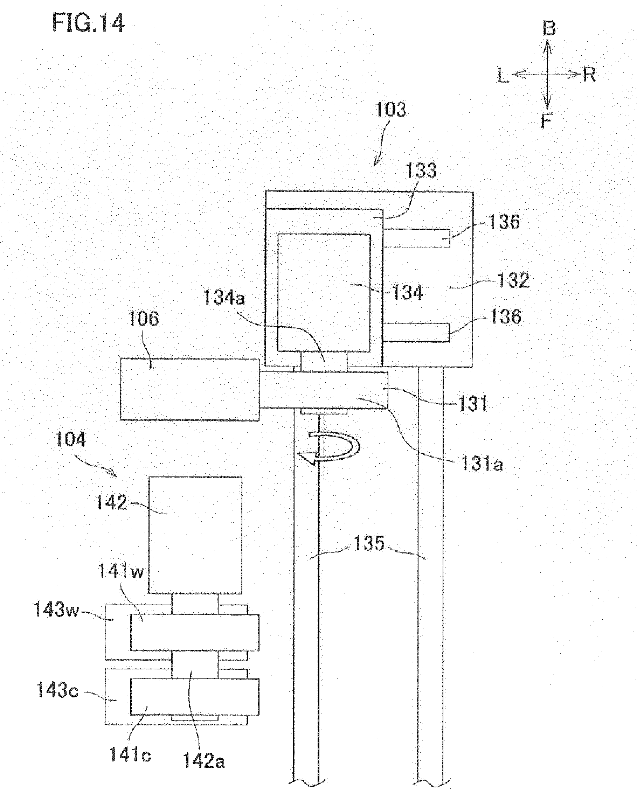

The pad cleaner portion 106 removes ink remaining on the pad 131 from which the ink has been adhered to the rim portion 11. When the pad 131 is rotated while being in contact with the pad cleaner portion 106 as illustrated in FIG. 14, the pad 131 is cleaned by the pad cleaner portion 106. The installment position of the pad cleaner portion 106 is not particularly limiting, so long as the pad 131 can be cleaned while being fixed to the pad fixing shaft 134a. In the present embodiment, the pad cleaner portion 106 is provided at the rear of the forme roll mounting portion 104. In the case where the color of ink to be adhered to the pad 131 is changed, the pad 131 is cleaned by the pad cleaner portion 106. In addition, the pad 131 is cleaned by the pad cleaner portion 106 every predetermined number of printing processes.

The drying device 107 blows air to the part of the rim portion 11 having ink adhered thereon to dry the ink during pad printing (during the rotation of the vehicular wheel 10). The installment position of the drying device 107 is not particularly limiting, so long as the drying device 107 can dry ink adhered to the rim portion 11. In the present embodiment, the drying device 107 is placed to face the right part of the rim portion 11 of the vehicular wheel 10 fixed to the wheel fixing shaft 152a. In the present embodiment, color ink is laminated and printed on the white ink. For this to occur, the white ink transferred on the rim portion 11 is dried by the drying device 107, which can prevent color ink to be printed subsequently from blurring or losing its shape.

The control unit (not illustrated) is configured to control the operations of the pad printing machine 102, the wheel moving mechanism 105, and the drying device 107. The control unit includes a CPU (Central Processing Unit), a ROM (Read Only Memory), a RAM (Random Access memory), and the like. The control unit executes various processes by the CPU according to data or programs stored in the RAM or the ROM to form the decorated portions 60a to 60c on the inner circumferential surface of the bottom wall portion 14 of the rim portion 11 of the vehicular wheel 10.

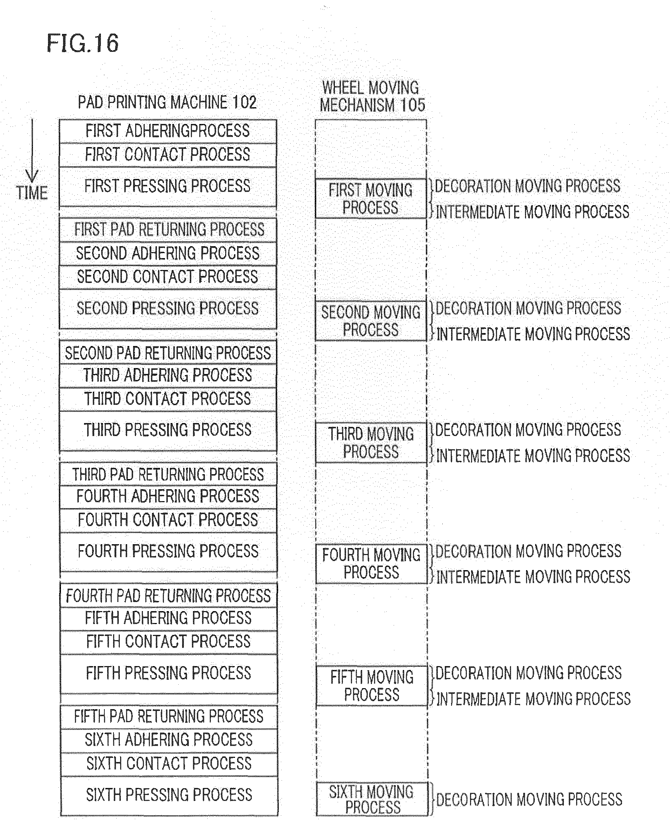

The procedure for decorating the vehicular wheel 10 by the decorating device 101 is described below. FIG. 16 is a diagram illustrating the process for decorating the vehicular wheel.

Firstly, the vehicular wheel 10 is fixed to the wheel fixing shaft 152a (fixing process). The vehicular wheel 10 is positioned such that one end (specifically, the front end in the rotation direction of the vehicular wheel 10) of the decoration position 64a in the circumferential direction on the inner circumferential surface of the bottom wall portion 14 of the rim portion 11 of the vehicular wheel 10 is located at the lowermost end of the bottom wall portion 14.

As illustrated in FIG. 10, the outer circumferential surface 131a of the pad 131 fixed to the pad fixing shaft 134a is brought into contact with the outer circumferential surface of the rear forme roll 141w out of two forme rolls 141w and 141c. Then, the forme roll drive motor 142 and the pad drive motor 134 are activated to rotate the forme roll 141 and the pad 131. This process causes white ink to be adhered to the outer circumferential surface 131a of the pad 131 from the forme roll 141w (first adhering process).

Then, the left-right slide table 133 and the front-back slide table 132 are moved, and the pad 131 to which the white ink is adhered is placed on the inside of the rim portion 11 of the vehicular wheel 10. Thereafter, the lower end portion (a part of the transfer surface) of the outer circumferential surface 131a of the pad 131 is pressed on one circumferential end (the front end in the rotation direction of the vehicular wheel 10) of the decoration position 64a on the inner circumferential surface of the bottom wall portion 14 of the rim portion 11 of the vehicular wheel 10 by the not-illustrated up-down moving mechanism of the pad mounting portion 103. More specifically, the portion where the ink forming one circumferential end of the line 61 is adhered to the outer circumferential surface 131a of the pad 131 is pressed on one circumferential end of the decoration position 64a.

Next, the pad drive motor 134 and the wheel drive motor 152 are activated to rotate the pad 131 and the vehicular wheel 10. With the rotation of the pad 131 and the vehicular wheel 10, the ink adhered to the outer circumferential surface 131a of the pad 131 is transferred onto the entire circumferential area of the decoration position 64a on the rim portion 11. Thus, the line 61 is printed on the decoration position 64a with white ink.

After the entire circumferential area of the decoration position 64a on the rim portion 11 of the vehicular wheel 10 is decorated, the rotation of the pad 131 and the vehicular wheel 10 is stopped. At that time, the pad 131 and the vehicular wheel 10 are rotated until one circumferential end (specifically, the front end in the rotation direction of the vehicular wheel 10) of the decoration position 64b on the rim portion 11 of the vehicular wheel 10 is located on the lower end portion of the bottom wall portion 14, and then, the rotation of the pad 131 and the vehicular wheel 10 is stopped. Therefore, the pad 131 makes one or more revolutions.

Here, the process after the pad 131 is moved from the position where it is in contact with the forme roll 141 until a part of the outer circumferential surface 131a of the pad 131 is brought into contact with the inner circumferential surface (decoration surface) of the bottom wall portion 14 of the rim portion 11 is defined as a contact process. In the contact process, the pad 131 is not elastically deformed. Further, the process for pressing a part of the outer circumferential surface 131a of the pad 131, which has been in contact with a part of the decoration position 64a on the inner circumferential surface of the bottom wall portion 14 of the rim portion 11 in the contact process, onto a part of the decoration position 64a on the rim portion 11 by further moving the pad fixing shaft 134a toward the rim portion 11, and the process for decorating the entire circumferential area of the decoration position 64a by rotating the pad 131 in a state in which a part of the outer circumferential surface 131a of the pad 131 is pressed onto the rim portion 11 are collectively defined as a pressing process. In the pressing process, the pad 131 is elastically deformed.

Further, the process for rotating the vehicular wheel 10 is defined as a moving process. In the moving process, the vehicular wheel 10 moves in the circumferential direction of the rim portion 11 relative to the position of the pad 131 pressed onto the rim portion 11. As illustrated in FIG. 16, a part of the moving process is performed simultaneously with a part of the pressing process. The part in the pressing process after the start of the rotation of the pad 131 is performed simultaneously with the moving process (specifically, a subsequently-described decoration moving process). The process, in the moving process, for rotating the rim portion 11 by the circumferential length of the decoration position 64a after the start of the moving process is defined as the decoration moving process. In the moving process, the part after the decoration moving process described above is defined as an intermediate moving process. In the intermediate moving process, the rim portion 11 is rotated by a circumferential distance between the decoration position 64a and the decoration position 64b. It should be noted that the definition of the contact process, the pressing process, the decoration moving process, and the intermediate moving process described above is not limited to the case for decorating the decoration position 64a. It is also applied to the case for decorating the decoration positions 64b and 64c.

The description now returns to the decoration procedure for the vehicular wheel 10. A drying process for drying the ink adhered to the rim portion 11 by the drying device 107 is performed simultaneously with the moving process. However, since the area of the rim portion 11 on which ink is adhered has not yet been moved to the position of the drying device 107 just after the start of the moving process, the drying process for drying ink is performed simultaneously with only a part of the moving process in a strict sense.

After the first pressing process and the first moving process, the pad 131 is separated from the rim portion 11 and moved to the position of the forme roll 141w. The process for moving the pad 131 to the position of the forme roll 141 (141w or 141c) from the position where it is in contact with the rim portion 11 is defined as a pad returning process. After the pad returning process, the second adhering process is performed as in the first adhering process.

Thereafter, the lower end portion, on which white ink is adhered, of the outer circumferential surface 131a of the pad 131 is brought into contact with one circumferential end (the front end in the rotation direction of the vehicular wheel 10) of the decoration position 64b on the inner circumferential surface of the bottom wall portion 14 of the rim portion 11 of the vehicular wheel 10 (second contact process). Subsequently, the second pressing process and the second moving process are performed. Thus, the line 61 is printed on the decoration position 64b on the rim portion 11 of the vehicular wheel 10 with white ink, and one circumferential end of the decoration position 64c is located at the lower end portion of the bottom wall portion 14.

Next, the second pad returning process is performed as in the first pad returning process. Then, the third adhering process is performed. Thereafter, the lower end portion, on which white ink is adhered, of the outer circumferential surface 131a of the pad 131 is brought into contact with one circumferential end of the decoration position 64c on the inner circumferential surface of the bottom wall portion 14 of the rim portion 11 of the vehicular wheel 10 (third contact process). Subsequently, the third pressing process and the third moving process are performed. Thus, the line 61 is printed on the decoration position 64c on the rim portion 11 of the vehicular wheel 10 with white ink, and one circumferential end of the decoration position 64a is located at the lower end portion of the bottom wall portion 14.

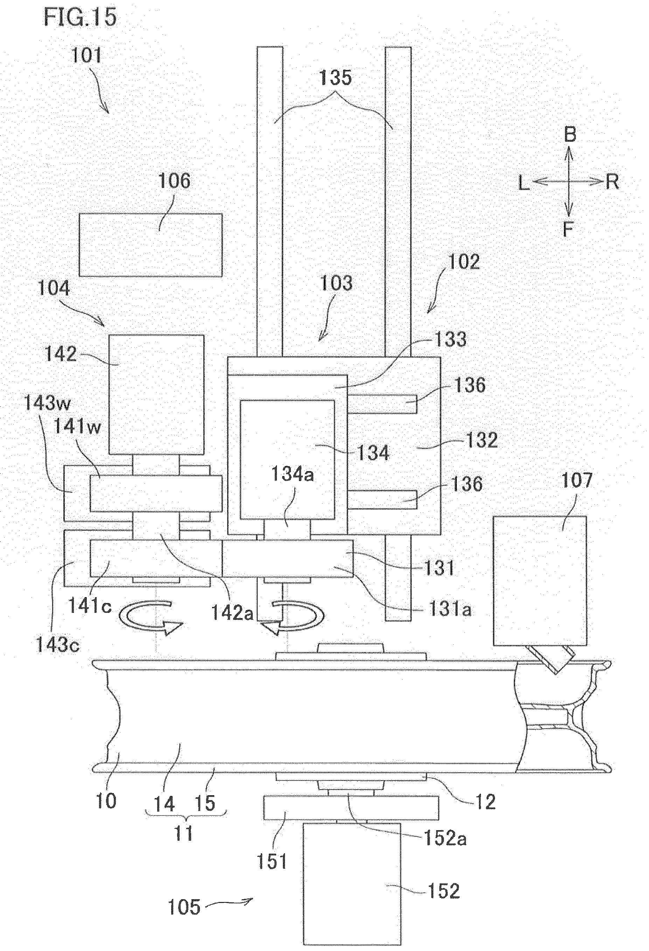

After the third pressing process, the pad 131 is separated from the rim portion 11 and moved to the pad cleaner portion 106 as illustrated in FIG. 14. Then, the white ink remaining on the pad 131 is removed by the pad cleaner portion 106. After the cleaning of the pad 131 is finished, the pad 131 is moved to the position of the forme roll 141c as illustrated in FIG. 15. The process for cleaning the pad 131 by the pad cleaner portion 106 is defined as a pad cleaning process. The pad cleaning process is performed during the process (third pad returning process) for moving the pad 131 to the position of the forme roll 141c from the position where it is in contact with the rim portion 11.

It is to be noted that, simultaneously with the cleaning process, the ink adhered to the rim portion 11 may be dried by the drying device 107 by rotating the vehicular wheel 10. When this drying process is ended, the rotation of the vehicular wheel 10 is stopped at the point of time at which one circumferential end (specifically, the front end in the rotation direction of the vehicular wheel 10) of the decoration position 64a on the rim portion 11 of the vehicular wheel 10 is located on the lower end portion of the rim portion 11.

Thereafter, as illustrated in FIG. 15, the forme roll drive motor 142 and the pad drive motor 134 are activated. Therefore, color ink is adhered to the outer circumferential surface 131a of the pad 131 from the forme roll 141c (fourth adhering process). Then, the lower end portion, on which color ink is adhered, of the outer circumferential surface 131a of the pad 131 is brought into contact with one circumferential end of the decoration position 64a on the inner circumferential surface of the bottom wall portion 14 of the rim portion 11 of the vehicular wheel 10 (fourth contact process). At that time, the line 61 has already been printed on the decoration position 64a with white ink. Subsequently, the fourth pressing process and the fourth moving process are performed. Thus, the line 61 is printed on the decoration position 64a on the rim portion 11 of the vehicular wheel 10 with color ink, whereby the decorated portion 60a is formed.

Then, the pad 131 is moved to the position of the forme roll 141c (fourth pad returning process), and the fifth adhering process is performed. After the fifth contact process, the fifth pressing process and the fifth moving process are performed to form the decorated portion 60b on the decoration position 64b.

Then, the pad 131 is moved to the position of the forme roll 141c (fifth pad returning process), and the sixth adhering process is performed. After the sixth contact process, the sixth pressing process and the sixth moving process are performed to form the decorated portion 60c on the decoration position 64c.

In this way, the area, which is longer than the maximum length (diameter) of the pad 131, on the rim portion 11 of the vehicular wheel 10 is decorated by the pad 131 of the pad printing machine 102. The area to be decorated by the pad 131 is longer than the circumferential length of the outer circumferential surface 131a of the pad 131. Specifically, the area to be decorated by the pad 131 is almost three times as long as the circumferential length of the outer circumferential surface 131a of the pad 131.

The decorated portions 60a to 60c having the same pattern are arranged in the circumferential direction of the rim portion 11 on the inner circumferential surface (decoration surface) of the bottom wall portion 14 of the rim portion 11 of the vehicular decorative wheel 10B according to the present embodiment. The decorated portions 60a to 60c are formed by a decoration technology for directly applying ink onto the decoration surface of the rim portion 11, that is, by printing. The decorated portions 60a to 60c include a pattern having a non-uniform length in a direction orthogonal to the circumferential direction of the rim portion 11. The pattern described above may not be formed by painting a groove for decoration, coating using a masking, or attaching stickers. Even if it is possible, much time is required, and therefore, productivity deteriorates. On the other hand, the decorated portions 60a to 60c in the present embodiment are formed by printing, and thus, a degree of freedom in decoration and productivity can be enhanced. Therefore, the present embodiment implements the vehicular decorative wheel 10B that includes the rim portion 11, on which the decorated portions 60a to 60c are formed, and that can be manufactured while maintaining high productivity even with a high degree of freedom in decoration.

The vehicular decorative wheel 10B is decorated by pad printing. Pad printing is a printing technology in which ink is transferred onto a pad from a plate, and then, the pad is pressed onto an object to be decorated to perform printing (decoration). Therefore, as compared with painting a groove for decoration, coating using a masking, and attaching stickers, the degree of freedom in decoration and productivity can further be improved.

Further, in the present embodiment, the area, which is longer than the maximum length of the transfer surface 131a of the pad 131, on the inner circumferential surface (decoration surface) of the bottom wall portion 14 of the rim portion 11 of the vehicular wheel 10 is decorated by the pad 131. Accordingly, the size of the pad 131 may be small, even if the circumferential length of the inner circumferential surface (decoration surface) of the bottom wall portion 14 of the rim portion 11 is long. Since the size of the pad 131 is small, uniformity in pressure for pressing the pad 131 onto the vehicular wheel 10 is easy to be attained. Accordingly, even a complex design can be printed with high precision, whereby the degree of freedom in decoration can further be improved.

The decorated portions 60a to 60c are spaced in the circumferential direction of the rim portion 11. Therefore, printing misalignment between the decorated portion 60a and the decorated portion 60b is less visible as compared with the case where the decorated portion 60a and the decorated portion 60b partly overlap with each other or the case where the end of the decorated portion 60a and the end of the decorated portion 60b are located in the same position. Consequently, even if the decorated portions 60a to 60c are slightly shifted, this hardly causes a defect, and thus, productivity can be improved.

If the circumferential ends of the decorated portions 60a to 60c extend in the direction of the central axis of the rim portion 11 (the direction orthogonal to the circumferential direction of the rim portion 11), ink for forming the ends is likely to be left on the outer circumferential surface 131a of the pad 131. On the other hand, in the present embodiment, the circumferential ends of the decorated portions 60a to 60c obliquely extend with respect to the direction of the central axis of the rim portion 11 (the direction orthogonal to the circumferential direction of the rim portion 11). Therefore, ink for forming the ends is hardly left on the outer circumferential surface 131a of the pad 131. Accordingly, a printing quality of the decorated portions 60a to 60c is easily attained. Consequently, productivity can further be enhanced.

### <Third Embodiment>

Next, a third embodiment of the present teaching is described. The components having the similar configuration to the first and second embodiments are identified by the same reference signs, and the description thereof will be omitted as is appropriate. The description for the vehicular wheel 10, which is an object to be decorated, for a motorcycle is the same as that in the first embodiment, and thus, it is omitted.

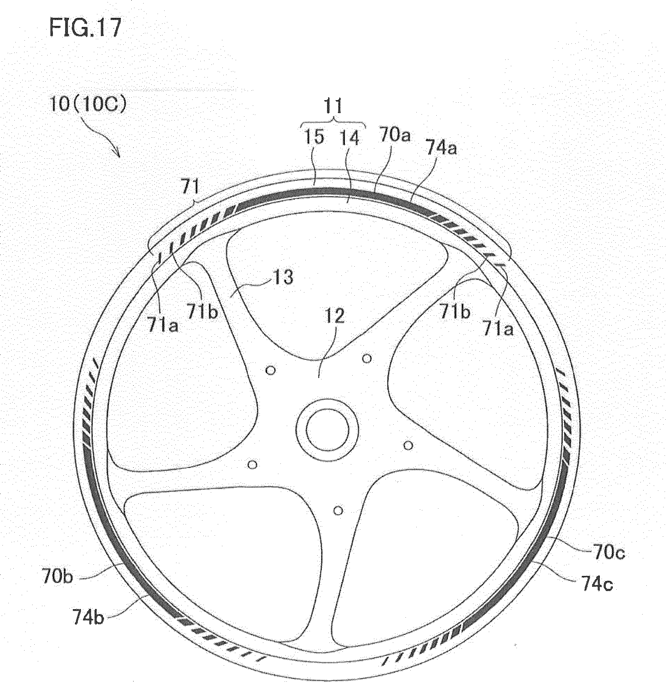

FIG. 17 illustrates a vehicular wheel 10C (hereinafter referred to as a vehicular decorative wheel 10C) decorated by a subsequently-described decorating device 201 according to the present embodiment. The decorating device 201, the detail of which is described below, decorates the vehicular wheel 10 by pad printing. That is, the vehicular decorative wheel 10C is decorated by pad printing.

Decorated portions 70a to 70c arranged in the circumferential direction are formed on the outer surface of a side wall portion 15 of a rim portion 11 of the vehicular decorative wheel 10C. The positions where the decorated portions 70a to 70c are formed on the rim portion 11 of the vehicular wheel 10 are defined as decoration positions 74a to 74c. In the present embodiment, the entire circumferential area of the outer surface of the side wall portion 15 of the rim portion 11 of the vehicular wheel 10 corresponds to a decoration surface according to the present teaching.

Each of the decorated portions 70a to 70c is composed of a line 71. The decorated portions 70a to 70c are arranged with a pitch of 120°. The decorated portions 70a to 70c are spaced in the circumferential direction of the rim portion 11. In the present embodiment, the circumferential length of each of the decorated portions 70a to 70c corresponds to an angular range of about 90° of the side wall portion 15 of the rim portion 11. However, it is not limited thereto.

Both circumferential ends of each of the decorated portions 70a to 70c (line 71) are tilted with respect to the radial direction (the direction orthogonal to the circumferential direction of the rim portion 11) of the rim portion 11. Thus, the length of each of the decorated portions 70a to 70c (line 71) in the radial direction (the direction orthogonal to the circumferential direction) is not uniform in the circumferential direction of the rim portion 11.

Each of the decorated portions 70a to 70c (line 71) includes a plurality of lines arranged with a space in the circumferential direction of the rim portion 11. Both circumferential ends of each of a plurality of lines forming the line 71 are tilted with respect to the radial direction (the direction orthogonal to the circumferential direction of the rim portion 11) of the rim portion 11. Each of lines 71a located at both circumferential ends of the line 71 out of the plurality of lines forming the line 71 correspond to a first pattern in the present teaching. Further, each of lines 71b circumferentially adjacent to the line 71a corresponds to a second pattern in the present teaching.

The decorated portions 70a to 70c have a white color or a light color close to white. The decorated portions 70a to 70c have the same color. The decorated portions 70a to 70c are formed of ink. As in the second embodiment, ink used in the present embodiment has higher solvent content than the ink used in the first embodiment. The decorated portions 70a to 70c are formed only by a single printing with white ink or light-colored ink close to white. The decorated portions 70a to 70c correspond to a first decorated portion, a second decorated portion, and a third decorated portion in the present teaching.

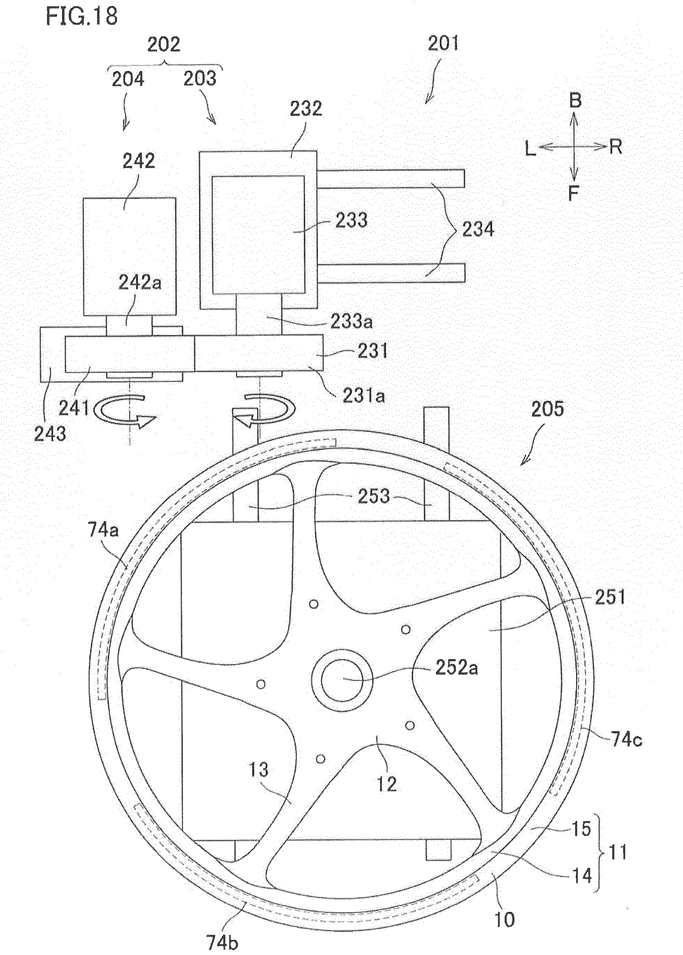

As illustrated in FIG. 18, the decorating device 201 includes a pad printing machine 202, a wheel moving mechanism 205, a control unit (not illustrated), and the like. In each diagram in the third embodiment, an arrow F indicates front, an arrow B indicates back, an arrow R indicates right, and an arrow L indicates left. The decorating device 201 is described below by using the directions of front, back, left, and right indicated in each diagram.

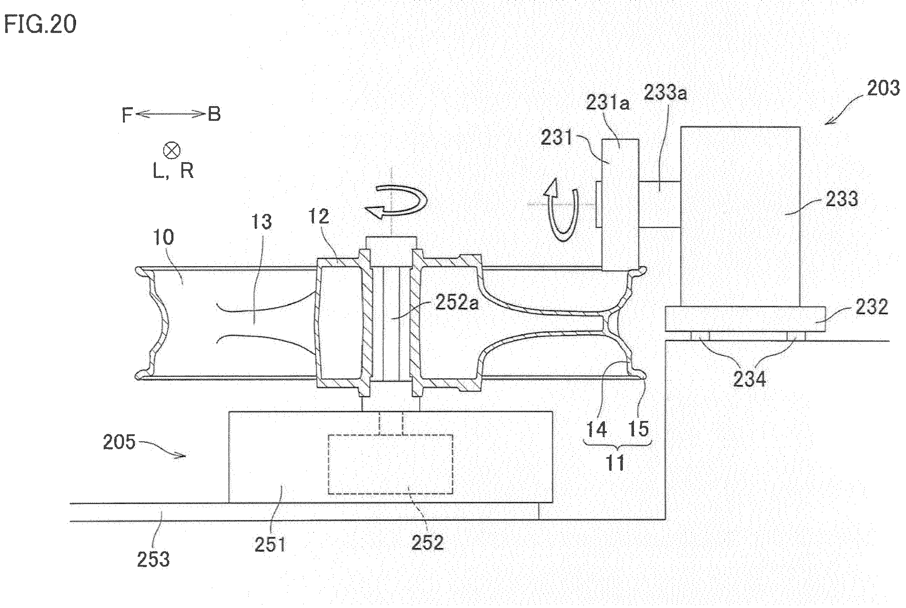

The wheel moving mechanism 205 includes a front-back slide portion 251 and wheel drive motor 252 (see FIG. 20). The front-back slide portion 251 is mounted on a rail 253 extending in the front-back direction so as to be movable in the front-back direction. The front-back slide portion 251 is driven in the front-back direction by a drive source not illustrated. The drive source is controlled by the control unit in the decorating device 201. Note that the drive source may not be provided, and an operator may manually move the front-back slide portion 251 in the front-back direction.

The wheel drive motor 252 is stored in the front-back slide portion 251. The wheel drive motor 252 moves integrally with the front-back slide portion 251 in the front-back direction. The wheel drive motor 252 is connected to a wheel fixing shaft 252a extending in the up-down direction. The wheel fixing shaft 252a protrudes from the top surface of the front-back slide portion 251.

The wheel fixing shaft 252a is inserted into the hub portion 12 of the vehicular wheel 10. The vehicular wheel 10 is fixed to the wheel fixing shaft 252a so as to be detachable. The vehicular wheel 10 is positioned relative to the wheel fixing shaft 252a. When the wheel drive motor 252 is activated with the vehicular wheel 10 being fixed to the wheel fixing shaft 252a, the vehicular wheel 10 is driven to rotate in the clockwise direction as viewed from top.

The pad printing machine 202 is placed at the rear of the wheel moving mechanism 205. The pad printing machine 202 includes a pad mounting portion 203 to which a pad 231 is mounted, and a forme roll mounting portion 204 to which a forme roll 241 is mounted. The pad mounting portion 203 includes the pad 231, a left-right slide table 232, and a pad drive motor 233.

The left-right slide table 232 is placed on a rail 234 extending in the left-right direction so as to be movable in the left-right direction. The left-right slide table 232 is driven in the left-right direction by a drive source not illustrated. The drive source is controlled by the control unit in the decorating device 201. Note that the drive source may not be provided, and an operator may manually move the left-right slide table 232 in the left-right direction.

The pad drive motor 233 is placed on the left-right slide table 232 and moves integrally with the left-right slide table 232 in the left-right direction. The pad drive motor 233 is connected to a pad fixing shaft 233a extending in the front-back direction. The pad fixing shaft 233a extends in the direction orthogonal to the wheel fixing shaft 252a. The pad drive motor 233 (and pad fixing shaft 233a) is movable in the up-down direction by a not-illustrated up-down moving mechanism of the pad mounting portion 203. The up-down moving mechanism may be configured to move both the pad drive motor 233 and the left-right slide table 232 or to move the pad drive motor 233 relative to the left-right slide table 232. The up-down moving mechanism may be controlled by the control unit in the decorating device 201 or may be manually operated.

The shape and material of the pad 231 is the same as the pad 131 in the second embodiment. The circumferential length of the outer circumferential surface 231a of the pad 231 is slightly longer than the circumferential length of the decorated portions 70a to 70c. The pad fixing shaft 233a is inserted into a center hole of the pad 231. The pad 231 is detachably fixed to the pad fixing shaft 233a (pad fixing jig). The central axis of the rim portion 11 of the vehicular wheel 10 fixed to the wheel fixing shaft 252a extends in the direction orthogonal to the central axis of the outer circumferential surface 231a of the pad 231 fixed to the pad fixing shaft 233a. The pad 231 is rotated in the counterclockwise direction as viewed from front by activating the pad drive motor 233.

The forme roll mounting portion 204 is provided at the left of the pad mounting portion 203. The forme roll mounting portion 204 includes a forme roll 241, a forme roll drive motor 242, an ink tray 243, and a squeegee (not illustrated).

The forme roll drive motor 242 is connected to a forme roll fixing shaft 242a. The forme roll fixing shaft 242a extends parallel to the pad fixing shaft 233a. The forme roll 241 is formed into a cylindrical shape. The forme roll fixing shaft 242a is inserted into the center hole of the forme roll 241. The forme roll 241 is fixed to the forme roll fixing shaft 242a. The forme roll 241 is rotated in the direction opposite to the pad 231 (clockwise direction as viewed from front) by activating the forme roll drive motor 242.

The forme roll 241 is an intaglio having a groove of the line 71 printed on the outer circumferential surface thereof. In the present embodiment, the outer diameter of the forme roll 241 is the same as the outer diameter of the pad 231. However, it may be different therefrom. The forme roll 241 is disposed at the same position as the pad 231 as viewed in the left-right direction.

The ink tray 243 is provided below the forme roll 241. The ink tray 243 is supplied with ink. The lowermost end of the forme roll 241 is in contact with ink in the ink tray 243. Like the squeegee 144 (see FIG. 11) in the second embodiment, the squeegee (not illustrated) is disposed at the upper left of the forme roll 241, and the tip thereof is in contact with the outer circumferential surface of the forme roll 241.

As illustrated in FIG. 18, the pad drive motor 233 and the forme roll drive motor 242 are activated to rotate the pad 231 and the forme roll 241 at the same speed with the outer circumferential surface 231a (transfer surface) of the pad 231 being in contact with the outer circumferential surface of the forme roll 241. Thus, ink is adhered (transferred) to the outer circumferential surface 231a of the pad 231 from the forme roll 241 as in the second embodiment. In the present embodiment, ink is adhered to the rear portion of the outer circumferential surface 231a of the pad 231.

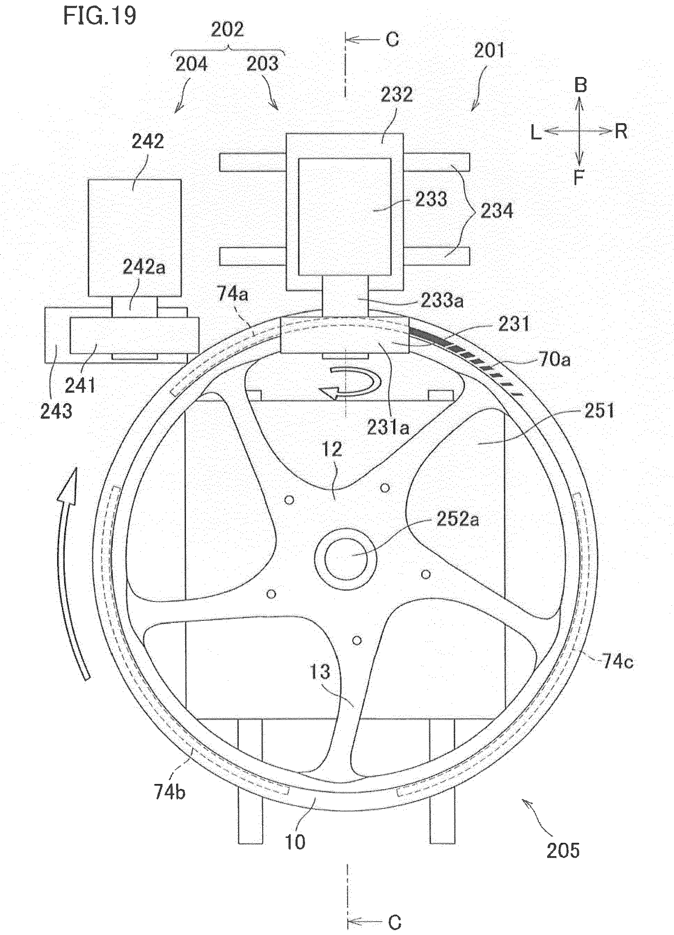

After ink has adhered to the outer circumferential surface 231a of the pad 231 from the forme roll 241, the pad 231 is placed above the side wall portion 15 of the rim portion 11 of the vehicular wheel 10 by moving the front-back slide portion 251 and the left-right slide table 232 as illustrated in FIG. 19. Then, as illustrated in FIG. 20, the lower end portion of the outer circumferential surface 231a of the pad 231 is pressed onto the outer surface (decoration surface) of the side wall portion 15 of the rim portion 11 by moving the pad 231 downward with the not-illustrated up-down moving mechanism in the pad mounting portion 203. Next, the pad 231 and the vehicular wheel 10 are rotated by activating the pad drive motor 233 and the wheel drive motor 252. More specifically, the pad 231 and the vehicular wheel 10 are rotated in such a manner that the distance of movement of the outer circumferential surface 231a of the pad 231 per time unit and the distance of movement of the side wall portion 15 (decoration surface) of the rim portion 11 of the vehicular wheel 10 per time unit are substantially the same. Thus, the ink adhered to the outer circumferential surface 231a of the pad 231 is re-transferred onto the rim portion 11, whereby the line 71 is printed on the rim portion 11.

The control unit (not illustrated) is configured to control the operations of the pad printing machine 202 and the wheel moving mechanism 205. The control unit includes a CPU (Central Processing Unit), a ROM (Read Only Memory), a RAM (Random Access memory), and the like. The control unit executes various processes by the CPU according to data or programs stored in the RAM or the ROM to form the decorated portions 70a to 70c on the outer surface of the side wall portion 15 of the rim portion 11 of the vehicular wheel 10.

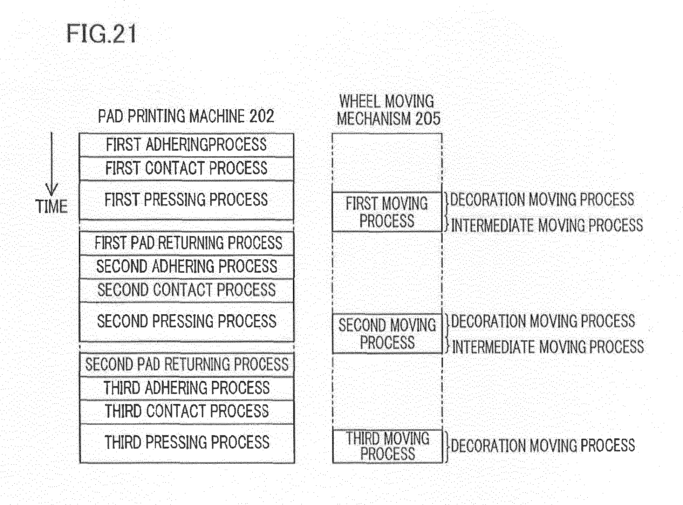

The procedure for decorating the vehicular wheel 10 by the decorating device 201 is described below. FIG. 21 is a diagram illustrating the process for decorating the vehicular wheel.

Firstly, the vehicular wheel 10 is fixed to the wheel fixing shaft 252a (fixing process). The vehicular wheel 10 is positioned such that one circumferential end (specifically, the front end in the rotation direction of the vehicular wheel 10) of the decoration position 74a on the side wall portion 15 of the vehicular wheel 10 is located at the rear end of the side wall portion 15.

As illustrated in FIG. 18, the outer circumferential surface 231a of the pad 231 fixed to the pad fixing shaft 233a is brought into contact with the outer circumferential surface of the forme roll 241. Then, the forme roll drive motor 242 and the pad drive motor 233 are activated to rotate the forme roll 241 and the pad 231. Therefore, ink is adhered to the outer circumferential surface 231a of the pad 231 from the forme roll 241 (first adhering process).

Then, the left-right slide table 232 and the front-back slide portion 251 are moved to place the pad 231, to which the ink is adhered, above the outer surface of the side wall portion 15 of the rim portion 11 of the vehicular wheel 10. Thereafter, the lower end (a part of the transfer surface) of the outer circumferential surface 231a of the pad 231 is pressed onto one circumferential end (the front end in the rotation direction of the vehicular wheel 10) of the decoration position 74a on the outer surface of the side wall portion 15 of the rim portion 11 of the vehicular wheel 10 by the not-illustrated up-down moving mechanism in the pad mounting portion 203. More specifically, the portion where the ink forming one circumferential end of the line 71 is adhered to the outer circumferential surface 231a of the pad 231 is pressed onto one circumferential end of the decoration position 74a.

Then, the pad 231 and the vehicular wheel 10 are rotated by activating the pad drive motor 233 and the wheel drive motor 252. With the rotation of the pad 231 and the vehicular wheel 10, the ink adhered to the outer circumferential surface 231a of the pad 231 is transferred onto the entire circumferential area of the decoration position 74a on the rim portion 11. Thus, the decorated portion 70a is formed on the decoration position 74a.

After the entire circumferential area of the decoration position 74a on the rim portion 11 of the vehicular wheel 10 is decorated, the rotation of the pad 231 and the vehicular wheel 10 is stopped. At that time, the pad 231 and the vehicular wheel 10 are rotated until one circumferential end (specifically, the front end in the rotation direction of the vehicular wheel 10) of the decoration position 74b on the rim portion 11 of the vehicular wheel 10 is located on the rear end portion of the side wall portion 15, and then, the rotation of the pad 231 and the vehicular wheel 10 is stopped. Therefore, the pad 231 makes one or more revolutions.

Here, the process after the pad 231 is moved from the position where it is in contact with the forme roll 241 until a part of the outer circumferential surface 231a of the pad 231 is brought into contact with the outer surface (decoration surface) of the side wall portion 15 of the rim portion 11 is defined as a contact process. In the contact process, the pad 231 is not elastically deformed. Further, the process for pressing a part of the outer circumferential surface 231a of the pad 231, which has been in contact with a part of the decoration position 74a on the outer surface of the side wall portion 15 of the rim portion 11 in the contact process, onto a part of the decoration position 74a on the rim portion 11 by further moving the pad fixing shaft 233a toward the rim portion 11, and the process for decorating the entire circumferential area of the decoration position 74a by rotating the pad 231 in a state in which a part of the outer circumferential surface 231a of the pad 231 is pressed onto the rim portion 11 are collectively defined as a pressing process. In the pressing process, the pad 231 is elastically deformed.

Further, the process for rotating the vehicular wheel 10 is defined as a moving process. In the moving process, the vehicular wheel 10 moves in the circumferential direction of the rim portion 11 relative to the position of the pad 231 pressed onto the rim portion 11. As illustrated in FIG. 21, a part of the moving process is performed simultaneously with a part of the pressing process. The part in the pressing process after the start of the rotation of the pad 231 is performed simultaneously with the moving process (specifically, a subsequently-described decoration moving process). In addition, the process, in the moving process, for rotating the rim portion 11 by the circumferential length of the decoration position 74a after the start of the moving process is defined as the decoration moving process. In the moving process, the part after the decoration moving process is defined as an intermediate moving process. In the intermediate moving process, the rim portion 11 is rotated by a circumferential distance between the decoration position 74a and the decoration position 74b. It should be noted that the definition of the contact process, the pressing process, the decoration moving process, and the intermediate moving process described above is not limited to the case for decorating the decoration position 74a. It is also applied to the case for decorating the decoration positions 74b and 74c.

The description now returns to the decoration procedure for the vehicular wheel 10. After the first pressing process and the first moving process, the pad 231 is separated from the rim portion 11 and moved to the position of the forme roll 241. The process for moving the pad 231 to the position of the forme roll 241 from the position where it is in contact with the rim portion 11 is defined as a pad returning process. After the pad returning process, the second adhering process is performed as in the first adhering process.

Thereafter, the lower end portion, on which ink is adhered, of the outer circumferential surface 231a of the pad 231 is brought into contact with one circumferential end (the front end in the rotation direction of the vehicular wheel 10) of the decoration position 74b on the outer surface of the side wall portion 15 of the rim portion 11 of the vehicular wheel 10 (second contact process). Subsequently, the second pressing process and the second moving process are performed. Thus, the decorated portion 70b is formed on the decoration position 74b on the rim portion 11 of the vehicular wheel 10, and one circumferential end of the decoration position 74c is located at the rear end portion of the side wall portion 15.

Next, the second pad returning process is performed as in the first pad returning process. Then, the third adhering process is performed. Thereafter, the lower end, on which white ink is adhered, of the outer circumferential surface 231a of the pad 231 is brought into contact with one circumferential end of the decoration position 74c on the outer surface of the side wall portion 15 of the rim portion 11 of the vehicular wheel 10 (third contact process). Subsequently, the third pressing process and the third moving process are performed. Thus, the decorated portion 70c is formed on the decoration position 74c on the rim portion 11 of the vehicular wheel 10.

In this way, the area, which is longer than the maximum length (diameter) of the pad 231, on the rim portion 11 of the vehicular wheel 10 is decorated by the pad 231 of the pad printing machine 202. The area to be decorated by the pad 231 is longer than the circumferential length of the outer circumferential surface 231a of the pad 231. Specifically, the area to be decorated by the pad 231 is almost three times as long as the circumferential length of the outer circumferential surface 231a of the pad 231.

The decorated portions 70a to 70c having the same pattern are arranged in the circumferential direction of the rim portion 11 on the outer surface (decoration surface) of the side wall portion 15 of the rim portion 11 of the vehicular wheel 10C according to the present embodiment. The decorated portions 70a to 70c are formed by a decoration technology for directly applying ink onto the decoration surface of the rim portion 11, that is, by printing. The decorated portions 70a to 70c include a pattern having a non-uniform length in a direction orthogonal to the circumferential direction of the rim portion 11. The pattern described above may not be formed by painting a groove for decoration, coating using a masking, or attaching stickers. Even if it is possible, much time is required, and therefore, productivity deteriorates. On the other hand, the decorated portions 70a to 70c in the present embodiment are formed by printing, and thus, a degree of freedom in decoration and productivity can be enhanced. Therefore, the present embodiment implements the vehicular wheel 10C that includes the rim portion 11, on which the decorated portions 70a to 70c are formed, and that can be manufactured while maintaining high productivity even with a high degree of freedom in decoration.

The vehicular decorative wheel 10C is decorated by pad printing. Pad printing is a printing technology in which ink is transferred onto a pad from a plate, and then, the pad is pressed onto an object to be decorated to perform printing (decoration). Therefore, as compared with painting a groove for decoration, coating using a masking, and attaching stickers, the degree of freedom in decoration and productivity can further be improved.

Further, in the present embodiment, the area, which is longer than the maximum length of the transfer surface of the pad, on the outer surface (decoration surface) of the side wall portion 15 of the rim portion 11 of the vehicular wheel 10 is decorated by the pad 231.

Accordingly, the size of the pad 231 may be small, even if the circumferential length of the outer surface (decoration surface) of the side wall portion 15 of the rim portion 11 is long. Since the size of the pad 231 is small, uniformity in pressure for pressing the pad 231 onto the vehicular wheel 10 is easy to be attained. Accordingly, even a complex design can be printed with high precision, whereby the degree of freedom in decoration can further be improved.

The decorated portions 70a to 70c are spaced in the circumferential direction of the rim portion 11. Therefore, the deviation on the boundary between the decorated portion 70a and the decorated portion 70b is hardly generated as compared with the case where one circumferential end of the decorated portion 70a and one circumferential end of the decorated portion 70b are on the same position. Consequently, the productivity can be enhanced.

If the circumferential ends of the decorated portions 70a to 70c extend in the radial direction of the rim portion 11, ink for forming the ends is likely to be left on the outer circumferential surface 231a of the pad 231. On the other hand, in the present embodiment, the circumferential ends of the decorated portions 70a to 70c obliquely extend with respect to the radial direction of the rim portion 11 (the direction orthogonal to the circumferential direction of the rim portion 11). Therefore, ink for forming the ends is hardly left on the outer circumferential surface 231a of the pad 231. Accordingly, a printing quality of the decorated portions 70a to 70c is easily attained. Consequently, productivity can further be enhanced.

Each of the decorated portions 70a to 70c is composed of the line 71. The line 71 includes a plurality of lines (including lines 71a and 71b) arranged with a space in the circumferential direction of the rim portion 11. With this configuration, the gap between the decorated portions is easily utilized for design. Specifically, the gap between the decorated portions is less visible due to the presence of the gap between the line 71a and the line 71b.

Further, both ends of each of a plurality of lines forming the line 71 (including the lines 71a and 71b) in the circumferential direction of the rim portion 11 obliquely extend with respect to the radial direction (the direction orthogonal to the circumferential direction of the rim portion 11) of the rim portion 11. Therefore, the amount of ink remaining on the outer circumferential surface 231a of the pad 231 is smaller, when the line 71 is printed. Accordingly, printing quality of the decorated portion 70a (70b, 70c) composed of a plurality of lines spaced in the circumferential direction is easily attained. Consequently, productivity can further be enhanced.

### <Fourth Embodiment>

Next, a fourth embodiment of the present teaching is described. The components having the similar configuration to the first to third embodiments are identified by the same reference signs, and the description thereof is omitted as appropriate. The description for the vehicular wheel 10, which is an object to be decorated, for a motorcycle, is the same as that in the first embodiment, and thus, is omitted.

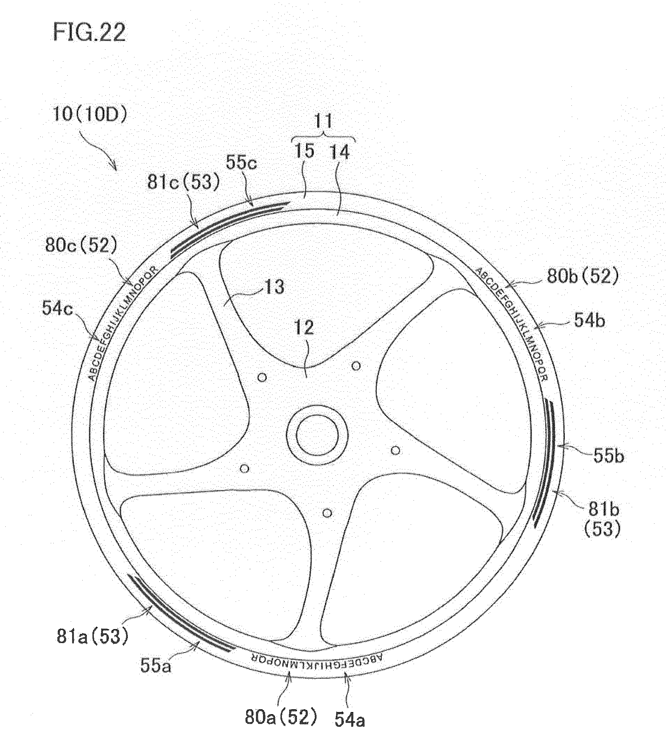

FIG. 22 illustrates a vehicular wheel 10D (hereinafter referred to as a vehicular decorative wheel 10D) decorated by a subsequently-described decorating device 301 according to the present embodiment. The decorating device 301, the detail of which is described below, decorates the vehicular wheel 10 by pad printing. That is, the vehicular decorative wheel 10D is decorated by pad printing.

Decorated portions 80a to 80c and 81a to 81c which are arranged in the circumferential direction are formed on the outer surface of a side wall portion 15 of a rim portion 11 of the vehicular decorative wheel 10D. As in the decorated portions 50a to 50c in the first embodiment, the decorated portions 80a to 80c are formed on decoration positions 54a to 54c on the rim portion 11 of the vehicular wheel 10. As in the decorated portions 51a to 51c in the first embodiment, the decorated portions 81a to 81c are formed on decoration positions 55a to 55c on the rim portion 11 of the vehicular wheel 10. Each of the decorated portions 80a to 80c is composed of a character 52 as in the decorated portions 50a to 50c in the first embodiment. The decorated portions 81a to 81c are composed of a line 53 as in the decorated portions 51a to 51c in the first embodiment. In the present embodiment, the entire circumferential area of the outer surface of the side wall portion 15 of the rim portion 11 of the vehicular wheel 10 corresponds to a decoration surface according to the present teaching.

The decorated portions 80a to 80c and 81a to 81c have a white color or a light color close to white. The decorated portions 80a to 80c have the same color, and the decorated portions 81a to 81c have the same color. In the present embodiment, the decorated portions 80a to 80c and the decorated portions 81a to 81c have different colors. However, they may have the same color. The decorated portions 80a to 80c and 81a to 81c are formed of ink. As in the second embodiment, ink used in the present embodiment has higher solvent content than the ink used in the first embodiment. The decorated portions 80a to 80c and 81a to 81c are formed only by a single printing with white ink or light-colored ink close to white. The decorated portions 80a to 80c correspond to a first decorated portion, a second decorated portion, and a third decorated portion in the present teaching. The same is applied to the decorated portions 81a to 81c.

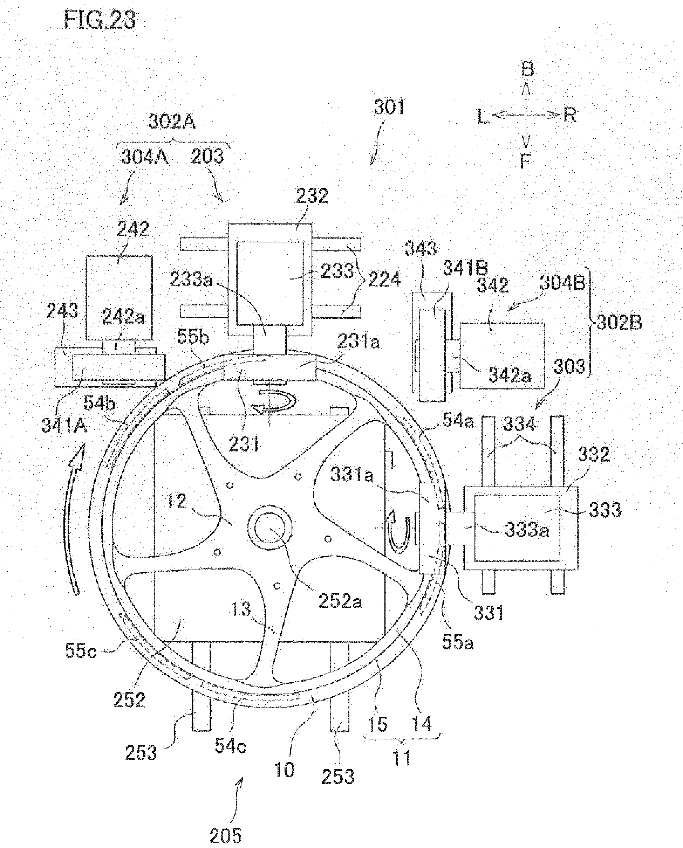

As illustrated in FIG. 23, the decorating device 301 includes two pad printing machines 302A and 302B, a wheel moving mechanism 205, a control unit (not illustrated), and the like. In each diagram in the fourth embodiment, an arrow F indicates front, an arrow B indicates back, an arrow R indicates right, and an arrow L indicates left. The decorating device 301 is described below by using the directions of front, back, left, and right indicated in each diagram.

The pad printing machine 302A has the configuration similar to the pad printing machine 202 in the third embodiment except that a forme roll 341A in a forme roll mounting portion 304A is different from the forme roll 241 in the third embodiment. The forme roll 341A is an intaglio having a groove of the line 53 printed on the outer circumferential surface thereof.

The pad printing machine 302B has the configuration similar to the pad printing machine 302A except that the orientation of installment thereof is different from the pad printing machine 302A. The pad printing machine 302B includes a pad mounting portion 303 to which a pad 331 is mounted, and a forme roll mounting portion 304B to which a forme roll 341B is mounted. The pad mounting portion 303 includes the pad 331, a front-back slide table 332, and a pad drive motor 333.

The front-back slide table 332 is mounted on a rail 334 extending in the front-back direction so as to be movable in the front-back direction. The front-back slide table 332 is driven in the front-back direction by a drive source not illustrated. The drive source is controlled by the control unit in the decorating device 301. Note that the drive source may not be provided, and an operator may manually move the front-back slide table 332 in the front-back direction.

The pad drive motor 333 is placed on the front-back slide table 332 and moves integrally with the front-back slide table 332 in the front-back direction. The pad drive motor 333 is connected to a pad fixing shaft 333a extending in the left-right direction. The pad fixing shaft 333a extends in the direction orthogonal to a wheel fixing shaft 252a. The pad drive motor 333 (and pad fixing shaft 333a) is movable in the up-down direction by a not-illustrated up-down moving mechanism of the pad mounting portion 303. The up-down moving mechanism may be configured to move both the pad drive motor 333 and the front-back slide table 332 or to move the pad drive motor 333 relative to the front-back slide table 332. The up-down moving mechanism may be controlled by the control unit in the decorating device 301 or may be manually operated.

The shape and material of the pad 331 is the same as the pad 131 in the second embodiment. The circumferential length of the outer circumferential surface 331a of the pad 331 is slightly longer than the circumferential length of the decorated portions 80a to 80c and 81a to 81c. The pad fixing shaft 333a is inserted into a center hole of the pad 331. The pad 331 is detachably fixed to the pad fixing shaft 333a (pad fixing jig). The central axis of the rim portion 11 of the vehicular wheel 10 fixed to the wheel fixing shaft 252a extends in the direction orthogonal to the central axis of the outer circumferential surface 331a of the pad 331 fixed to the pad fixing shaft 333a. The pad 331 is rotated in the counterclockwise direction as viewed from the left by activating the pad drive motor 333.

The forme roll mounting portion 304B is provided above the pad mounting portion 303. The forme roll mounting portion 304 includes a forme roll 341B, a forme roll drive motor 342, an ink tray 343, and a squeegee (not illustrated).

The forme roll drive motor 342 is connected to a forme roll fixing shaft 342a. The forme roll fixing shaft 342a extends parallel to the pad fixing shaft 333a. The forme roll 341B is formed into a cylindrical shape. The forme roll fixing shaft 342a is inserted into the center hole of the forme roll 341B. The forme roll 341B is fixed to the forme roll fixing shaft 342a. The forme roll 341B is rotated in the direction opposite to the pad 331 (clockwise direction as viewed from the left) by activating the forme roll drive motor 342.

The forme roll 341 B is an intaglio having a groove of the character 52 printed on the outer circumferential surface thereof. In the present embodiment, the outer diameter of the forme roll 341B is the same as the outer diameter of the pad 331. However, it may be different therefrom. The forme roll 341B is disposed at the same position as the pad 331 as viewed in the front-back direction.

The ink tray 343 is provided below the forme roll 341B. The ink tray 343 is supplied with ink. The lowermost end of the forme roll 341B is in contact with ink in the ink tray 343. The squeegee (not illustrated) is disposed at the upper rear of the forme roll 341B, and the tip thereof is in contact with the outer circumferential surface of the forme roll 341B.

The pad drive motor 333 and the forme roll drive motor 342 are activated to rotate the pad 331 and the forme roll 341B at the same speed with the outer circumferential surface 331a (transfer surface) of the pad 331 being in contact with the outer circumferential surface of the forme roll 341B. Thus, ink is adhered (transferred) onto the outer circumferential surface 331a of the pad 331 from the forme roll 341B. In the present embodiment, ink is adhered to the right part of the outer circumferential surface 331a of the pad 331.

After ink has adhered to the outer circumferential surface 331a of the pad 331 from the forme roll 341B, the pad 331 is placed above the side wall portion 15 of the rim portion 11 of the vehicular wheel 10 by moving the front-back slide portion 251 and the front-back slide table 332 as illustrated in FIG. 23. Then, the lower end of the outer circumferential surface 331a of the pad 331 is pressed onto the outer surface (decoration surface) of the side wall portion 15 of the rim portion 11 by moving the pad 331 downward with the not-illustrated up-down moving mechanism in the pad mounting portion 303. Next, the pad 331 and the vehicular wheel 10 are rotated by activating the pad drive motor 333 and the wheel drive motor 252. More specifically, the pad 331 and the vehicular wheel 10 are rotated in such a manner that the distance of movement of the outer circumferential surface 331a of the pad 331 per time unit and the distance of movement of the side wall portion 15 (decoration surface) of the rim portion 11 of the vehicular wheel 10 per time unit are substantially the same. Thus, the ink adhered to the outer circumferential surface 331a of the pad 331 is re-transferred onto the rim portion 11, whereby the character 52 is printed on the rim portion 11.

The control unit (not illustrated) is configured to control the operations of the pad printing machines 302A and 302B and the wheel moving mechanism 205. The control unit includes a CPU (Central Processing Unit), a ROM (Read Only Memory), a RAM (Random Access memory), and the like. The control unit executes various processes by the CPU according to data or programs stored in the RAM or the ROM to form the decorated portions 80a to 80c and 81a to 81c on the outer surface of the side wall portion 15 of the rim portion 11 of the vehicular wheel 10.

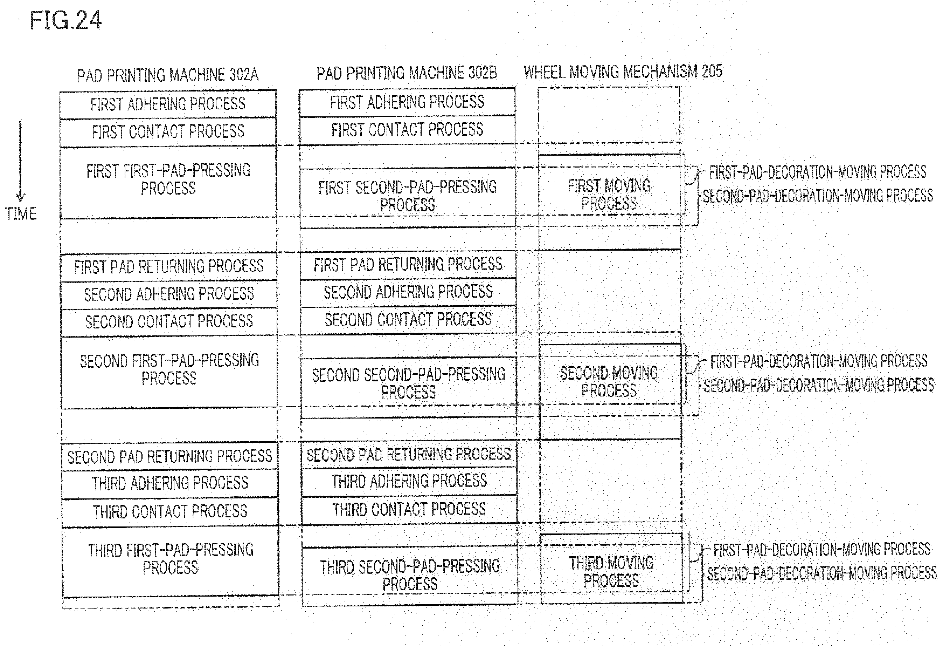

The procedure for decorating the vehicular wheel 10 by the decorating device 301 is described below. FIG. 24 is a diagram illustrating the process for decorating the vehicular wheel.

Firstly, the vehicular wheel 10 is fixed to the wheel fixing shaft 252a (fixing process). As illustrated in FIG. 23, the vehicular wheel 10 is positioned such that one circumferential end (specifically, the front end in the rotation direction of the vehicular wheel 10) of the decoration position 55b on the side wall portion 15 of the vehicular wheel 10 is located at the rear end of the side wall portion 15. At that time, the front end of the decoration position 54a in the rotation direction of the vehicular wheel 10 is located slightly rearward from the right end of the side wall portion 15.

Further, ink is adhered to the outer circumferential surface 231a of the pad 231 from the forme roll 341A by the pad printing machine 302A, and ink is adhered to the outer circumferential surface 331a of the pad 331 from the forme roll 341B by the pad printing machine 302B (first adhering process).

Then, the pads 231 and 331, to which the ink is adhered, are placed above the outer surface of the side wall portion 15 of the rim portion 11 of the vehicular wheel 10 as illustrated in FIG. 23. Thereafter, the lower end portions (a part of the transfer surface) of the outer circumferential surfaces 231a and 331a of the pads 231 and 331 are pressed onto the outer surface of the side wall portion 15 of the rim portion 11 of the vehicular wheel 10 by the not-illustrated up-down moving mechanism in the pad mounting portions 203 and 303. More specifically, the portion where the ink forming one circumferential end of the line 53 is adhered to the outer circumferential surface 231a of the pad 231 is pressed onto one circumferential end (the front end in the rotation direction of the vehicular wheel 10) of the decoration position 55b. Further, the portion where the ink is not adhered to the outer circumferential surface 331a of the pad 331 is pressed onto the position forward from the decoration position 54a on the rim portion 11 in the rotation direction of the vehicular wheel 10.

Next, the pads 231 and 331 and the vehicular wheel 10 are rotated by activating the pad drive motors 233 and 333 and the wheel drive motor 252. With the rotation of the pad 231 and the vehicular wheel 10, the ink adhered to the outer circumferential surface 231a of the pad 231 is transferred onto the entire circumferential area of the decoration position 55b on the rim portion 11. Thus, the decorated portion 81b is formed on the decoration position 55b. Further, with the rotation of the pad 331 and the vehicular wheel 10, the ink adhered to the outer circumferential surface 331a of the pad 331 is transferred onto the entire circumferential area of the decoration position 54a on the rim portion 11. Thus, the decorated portion 80a is formed on the decoration position 54a.

After the entire circumferential area of the decoration positions 54a and 55b on the rim portion 11 of the vehicular wheel 10 is decorated, the rotation of the pads 231 and 331 and the vehicular wheel 10 is stopped. At that time, the pads 231 and 331 and the vehicular wheel 10 are rotated until one circumferential end (specifically, the front end in the rotation direction of the vehicular wheel 10) of the decoration position 55c on the rim portion 11 of the vehicular wheel 10 is located on the rear end of the side wall portion 15, and then, the rotation of the pads 231 and 331 and the vehicular wheel 10 is stopped. Therefore, the pads 231 and 331 make one or more revolutions.

Here, the process after the pad 231 is moved from the position where it is in contact with the forme roll 341A until a part of the outer circumferential surface 231a of the pad 231 is brought into contact with the outer surface (decoration surface) of the side wall portion 15 of the rim portion 11 is defined as a first-pad-contact process. Further, the process after the pad 331 is moved from the position where it is in contact with the forme roll 341B until a part of the outer circumferential surface 331a of the pad 331 is brought into contact with the outer surface (decoration surface) of the side wall portion 15 of the rim portion 11 is defined as a second-pad-contact process. In the first-pad-contact process and the second-pad-contact processes, the pads 231 and 331 are not elastically deformed. In the present embodiment, the first-pad-contact process and the second-pad-contact process are simultaneously performed. The first-pad-contact process and the second-pad-contact process are collectively referred to as a contact process.

Further, the process for pressing a part of the outer circumferential surface 231a of the pad 231, which has been in contact with a part of the decoration position 55b on the outer surface of the side wall portion 15 of the rim portion 11 in the first-pad-contact process, onto a part of the decoration position 55b on the rim portion 11 by further moving the pad fixing shaft 233a toward the rim portion 11, and the process for decorating the entire circumferential area of the decoration position 55b by rotating the pad 231 in a state in which a part of the outer circumferential surface 231a of the pad 231 is pressed onto the rim portion 11 are collectively defined as a first-pad-pressing process. In addition, the process, during the rotation of the pad 331, after a part of the outer circumferential surface 331a of the pad 331 is pressed onto the one circumferential end (more specifically, the front end in the rotation direction of the vehicular wheel 10) of the decoration position 54a until the entire circumferential area of the decoration position 54a is decorated by the pad 331 is defined as a second pad pressing process. In the first- and second-pad-pressing processes, the pads 231 and 331 are elastically deformed. In the present embodiment, a part of the first-pad-pressing process and a part of the second-pad-pressing process are simultaneously performed. More specifically, the second-pad-pressing process is started after the first-pad-pressing process and ended after the first-pad-pressing process. The first-pad-pressing process and the second-pad-pressing process are collectively referred to as a pressing process below.

Further, the process for rotating the vehicular wheel 10 is defined as a moving process. In the moving process, the vehicular wheel 10 moves in the circumferential direction of the rim portion 11 relative to the position of the pad 231 (331) pressed onto the rim portion 11. As illustrated in FIG. 24, a part of the moving process is performed simultaneously with a part of the pressing process. The part in the pressing process after the start of the rotation of the pads 231 and 331 is performed simultaneously with the moving process.

In the moving process, the process during which the outer circumferential surface 231a of the pad 231 is in contact with the decoration position 55b on the rim portion 11 is defined as a first-pad-decoration-moving process. During the first-pad-decoration-moving process, the rim portion 11 is rotated by the circumferential length of the decoration position 55b. In the moving process, the process during which the outer circumferential surface 331a of the pad 331 is in contact with the decoration position 54a on the rim portion 11 is defined as a second-pad-decoration-moving process. During the second-pad-decoration-moving process, the rim portion 11 is rotated by the circumferential length of the decoration position 54a.

It should be noted that the definition of the first-pad-contact process, the second-pad-contact process, the contact process, the first-pad-pressing process, the second-pad-pressing process, the pressing process, the first-pad-decoration-moving process, and the second-pad-decoration-moving process described above is not limited to the case for decorating the decoration positions 54a and 55b. It is also applied to the case for decorating the decoration positions 54b, 54c, 55a, and 55c.

The description now returns to the decoration procedure for the vehicular wheel 10. After the first pressing process and the first moving process, the pads 231 and 331 are separated from the rim portion 11 and moved to the positions of the forme rolls 341A and 341B. The process for moving the pads 231 and 331 to the positions of the forme rolls 341A and 341B from the position where they are in contact with the rim portion 11 is defined as a pad returning process. After the pad returning process, the second adhering process is performed as in the first adhering process.

Thereafter, the lower ends, on which ink is adhered, of the outer circumferential surfaces 231a and 331a of the pads 231 and 331 are brought into contact with the outer surface of the side wall portion 15 of the rim portion 11 of the vehicular wheel 10 (second contact process). More specifically, the lower end portion of the outer circumferential surface 231a of the pad 231 is brought into contact with one circumferential end of the decoration position 55c (the front end in the rotation direction of the vehicular wheel 10). The lower end portion of the outer circumferential surface 331a of the pad 331 is brought into contact with the position forward from the decoration position 54b on the outer surface of the side wall portion 15 of the rim portion 11 in the rotation direction of the vehicular wheel 10. Subsequently, the second pressing process and the second moving process are performed. Thus, the decorated portion 81c is formed on the decoration position 55c on the rim portion 11 of the vehicular wheel 10, the decorated portion 80b is formed on the decoration position 54b, and one circumferential end of the decoration position 55a is located at the rear end of the side wall portion 15.

Next, the second pad returning process is performed as in the first pad returning process. Thereafter, the third adhering process is performed, and then, the third contact process is performed. At that time, the lower end portion of the outer circumferential surface 231a of the pad 231 is brought into contact with one circumferential end of the decoration position 55a (the front end in the rotation direction of the vehicular wheel 10). The lower end portion of the outer circumferential surface 331a of the pad 331 is brought into contact with the position forward from the decoration position 54c on the outer surface of the side wall portion 15 of the rim portion 11 in the rotation direction of the vehicular wheel 10. Subsequently, the third pressing process and the third moving process are performed. Thus, the decorated portion 81a is formed on the decoration position 55a, and the decorated portion 80c is formed on the decoration position 54c on the rim portion 11 of the vehicular wheel 10.

In this way, the area, which is longer than the maximum length (diameter) of the pad 231, on the rim portion 11 of the vehicular wheel 10 is decorated by the pad 231 of the pad printing machine 302A. Also, the area, which is longer than the maximum length (diameter) of the pad 331, on the rim portion 11 of the vehicular wheel 10 is decorated by the pad 331 of the pad printing machine 302B. The area to be decorated by the pad 231 is longer than the circumferential length of the outer circumferential surface 231a of the pad 231. The area to be decorated by the pad 331 is longer than the circumferential length of the outer circumferential surface 331a of the pad 331.

The present embodiment provides the effects similar to those described in the first to third embodiments as for the configuration similar to the first to third embodiments.

### <Fifth Embodiment>

Next, a fifth embodiment of the present teaching is described. The components having the similar configuration to the first to fourth embodiments are identified by the same reference signs, and the description thereof is omitted as appropriate. The description for the vehicular wheel 10, which is an object to be decorated, for a motorcycle, is the same as that in the first embodiment, and thus, is omitted.

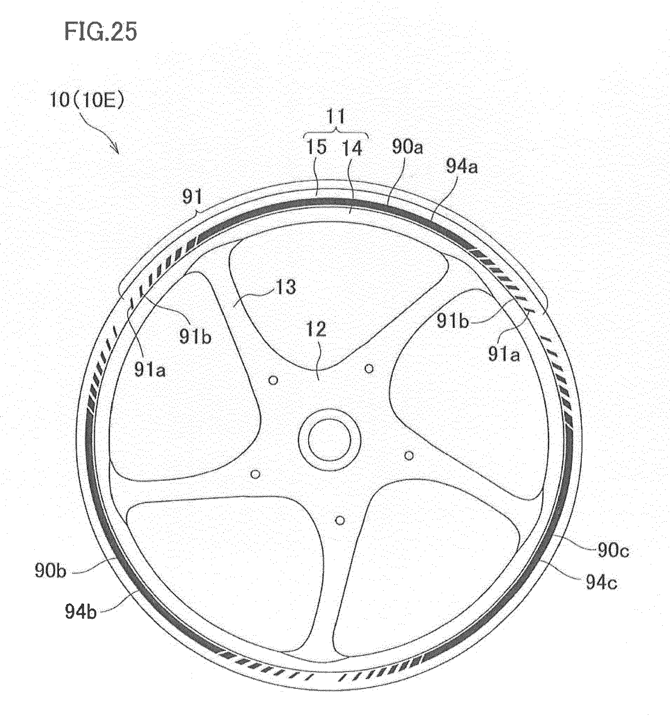

FIG. 25 illustrates a vehicular wheel 10E (hereinafter referred to as a vehicular decorative wheel 10E) decorated by a subsequently-described decorating device 401 according to the present embodiment. The decorating device 401, the detail of which is described below, decorates the vehicular wheel 10 by pad printing. That is, the vehicular decorative wheel 10E is decorated by pad printing.

Decorated portions 90a to 90c arranged in the circumferential direction are formed on the outer surface of a side wall portion 15 of a rim portion 11 of the vehicular decorative wheel 10E. The positions where the decorated portions 90a to 90c are formed on the rim portion 11 of the vehicular wheel 10 are defined as decoration positions 94a to 94c. In the present embodiment, the entire circumferential area of the outer surface of the side wall portion 15 of the rim portion 11 of the vehicular wheel 10 corresponds to a decoration surface according to the present teaching.

Each of the decorated portions 90a to 90c is composed of a line 91. The decorated portions 90a to 90c are arranged with a pitch of 120°. The decorated portions 90a to 90c are spaced in the circumferential direction of the rim portion 11. In the present embodiment, the circumferential length of each of the decorated portions 90a to 90c corresponds to an angular range of about 115° of the side wall portion 15 of the rim portion 11. However, it is not limited thereto.

Both circumferential ends of each of the decorated portions 90a to 90c (line 91) are tilted with respect to the radial direction (the direction orthogonal to the circumferential direction of the rim portion 11) of the rim portion 11. Thus, the length of each of the decorated portions 90a to 90c (line 91) in the radial direction (the direction orthogonal to the circumferential direction) is not uniform in the circumferential direction of the rim portion 11.

Each of the decorated portions 90a to 90c (line 91) includes a plurality of lines arranged with a space in the circumferential direction of the rim portion 11. Both circumferential ends of each of a plurality of lines forming the line 91 are tilted with respect to the radial direction (the direction orthogonal to the circumferential direction of the rim portion 11) of the rim portion 11. Each of lines 91a located at both circumferential ends of the line 91 out of the plurality of lines forming the line 91 correspond to a first pattern in the present teaching. Further, each of lines 91b circumferentially adjacent to the line 91a correspond to a second pattern in the present teaching.

The decorated portions 90a to 90c have a white color or a light color close to white. The decorated portions 90a to 90c have the same color. The decorated portions 90a to 90c are formed of ink. As in the second embodiment, ink used in the present embodiment has higher solvent content than the ink used in the first embodiment. The decorated portions 90a to 90c are formed only by a single printing with white ink or light-colored ink close to white. The decorated portions 90a to 90c correspond to a first decorated portion, a second decorated portion, and a third decorated portion in the present teaching.

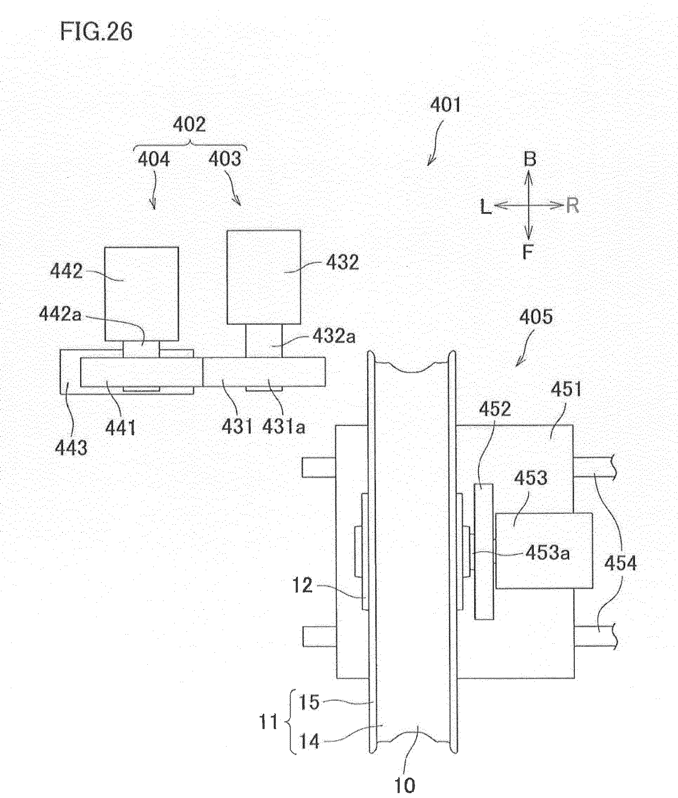

As illustrated in FIG. 26, the decorating device 401 includes a pad printing machine 402, a wheel moving mechanism 405, a control unit (not illustrated), and the like. In each diagram in the fifth embodiment, an arrow F indicates front, an arrow B indicates back, an arrow R indicates right, and an arrow L indicates left. The decorating device 401 is described below by using the directions of front, back, left, and right indicated in each diagram.

The wheel moving mechanism 405 includes a left-right slide table 451, a support member 452, and a wheel drive motor 453. The left-right slide table 451 is placed on a rail 454 extending to the rear in the left-right direction so as to be movable in the left-right direction. The left-right slide table 451 is driven in the left-right direction by a drive source not illustrated. The drive source is controlled by the control unit. Note that the drive source may not be provided, and an operator may manually move the left-right slide table 451 in the left-right direction.

The support member 452 is placed on the top surface of the left-right slide table 451. The wheel drive motor 453 is connected to a wheel fixing shaft 453a extending in the left-right direction. The wheel fixing shaft 453a is supported by the support member 452 so as to be rotatable. The wheel drive motor 453 and the support member 452 are moved integrally with the left-right slide table 451 in the left-right direction.

The wheel fixing shaft 453a is inserted into the hub portion 12 of the vehicular wheel 10. The vehicular wheel 10 is fixed to the wheel fixing shaft 453a so as to be detachable. The vehicular wheel 10 is positioned relative to the wheel fixing shaft 453a. When the wheel drive motor 453 is activated with the vehicular wheel 10 being fixed to the wheel fixing shaft 453a, the vehicular wheel 10 is driven to rotate in the clockwise direction as viewed from the left.

The pad printing machine 402 is placed at the rear of the wheel moving mechanism 405. The pad printing machine 402 is placed at the left rear of the wheel moving mechanism 405. The pad mounting portion 403 includes a pad 431 and a pad drive motor 432. The pad drive motor 432 is connected to a pad fixing shaft 432a extending in the front-back direction. The pad fixing shaft 432a extends in the direction orthogonal to the wheel fixing shaft 453a. The pad drive motor 432 (and pad fixing shaft 432a) is movable in the up-down direction by a not-illustrated up-down moving mechanism of the pad mounting portion 403. The up-down moving mechanism may be controlled by the control unit in the decorating device 401 or may be manually operated.

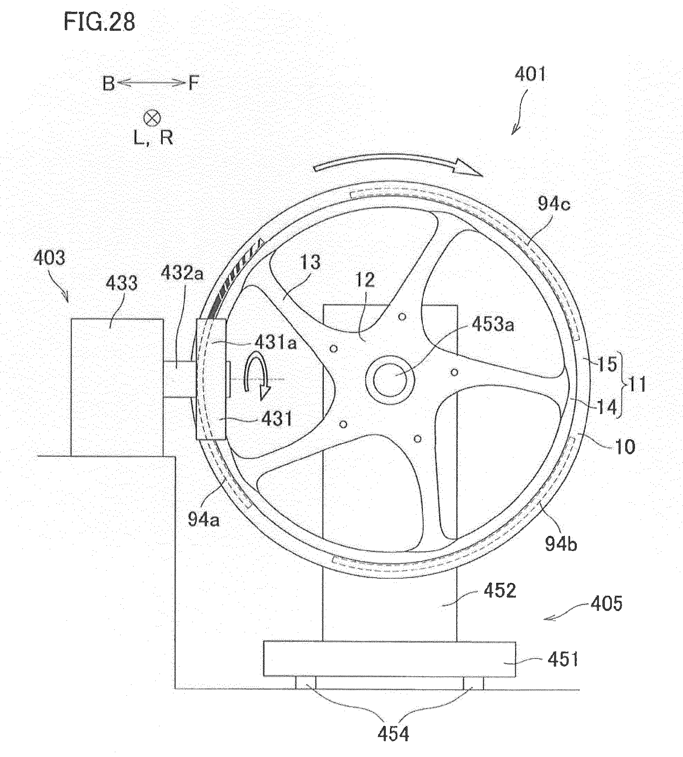

The shape and material of the pad 431 is the same as the pad 131 in the second embodiment. The circumferential length of the outer circumferential surface 431a of the pad 431 is slightly longer than the circumferential length of the decorated portions 90a to 90c. The circumferential length of the outer circumferential surface 431a of the pad 431 is equal to the length in the angular range of 120° of the side wall portion 15 of the rim portion 11. The pad fixing shaft 432a is inserted into a center hole of the pad 431. The pad 431 is detachably fixed to the pad fixing shaft 432a (pad fixing jig). The central axis of the rim portion 11 of the vehicular wheel 10 fixed to the wheel fixing shaft 453a extends in the direction orthogonal to the central axis of the outer circumferential surface 431a of the pad 431 fixed to the pad fixing shaft 432a. As illustrated in FIG. 28, the pad 431 fixed to the pad fixing shaft 432a is substantially on the same level as the center of the vehicular wheel 10 fixed to the wheel fixing shaft 453a in the up-down direction. The pad 431 is rotated in the counterclockwise direction as viewed from front by activating the pad drive motor 432.

The forme roll mounting portion 404 is provided at the left of the pad mounting portion 403. The forme roll mounting portion 404 includes a forme roll 441, a forme roll drive motor 442, an ink tray 443, and a squeegee (not illustrated). The forme roll 441 is an intaglio having a groove of the line 91 printed on the outer circumferential surface thereof. In the present embodiment, the outer diameter of the forme roll 441 is the same as the outer diameter of the pad 431. The forme roll 441 is disposed at the same position as the pad 431 as viewed in the left-right direction. The other configuration of the forme roll mounting portion 404 is the same as the forme roll mounting portion 204 in the third embodiment, and therefore, the description thereof is omitted.

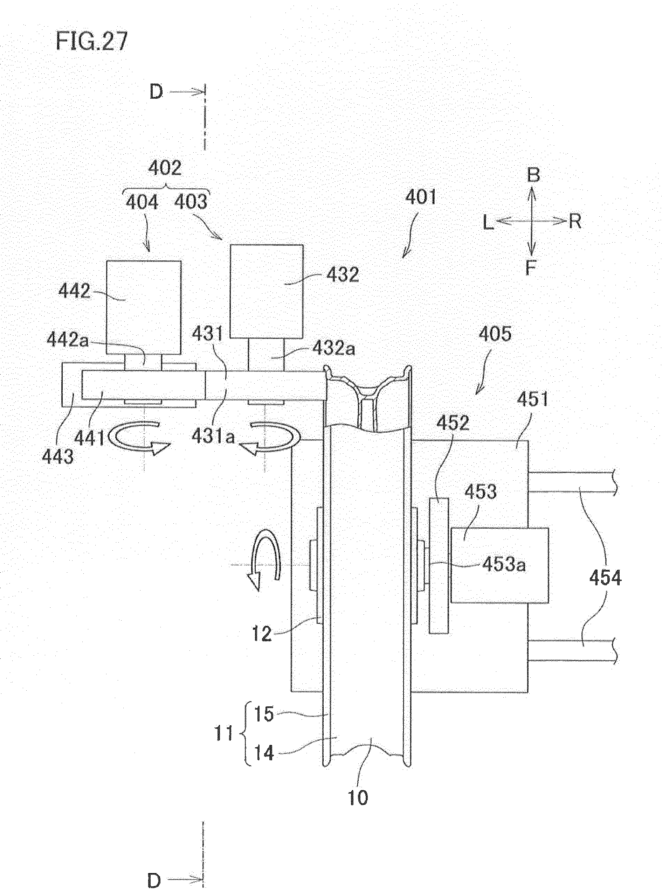

As illustrated in FIG. 27, the right end portion of the outer circumferential surface 431a of the pad 431 is pressed onto the rear end portion of the outer surface of the side wall portion 15 of the vehicular wheel 10, while the left end portion of the outer circumferential surface 431a of the pad 431 is brought into contact with the right end portion of the outer circumferential surface of the forme roll 441. With this state, the pad 431, the forme roll 441, and the vehicular wheel 10 are rotated by activating the pad drive motor 432, the forme roll drive motor 442, and the wheel drive motor 453. More specifically, the pad 431 and the forme roll 441 are rotated at the same speed. Further, the rotation speed of the vehicular wheel 10 is set such that the distance of movement of the outer circumferential surface 431a of the pad 431 per time unit and the distance of movement of the side wall portion 15 (decoration surface) of the rim portion 11 of the vehicular wheel 10 per time unit are substantially the same.

Thus, the ink in the groove on the forme roll 441 is adhered (transferred) onto the outer circumferential surface 431a of the pad 431 at the portion where the forme roll 441 and the pad 431 are in contact with each other. Then, ink adhered to the outer circumferential surface 431a of the pad 431 from the forme roll 441 is re-transferred onto the outer surface of the side wall portion 15 of the rim portion 11 of the vehicular wheel 10 with the rotation of the pad 431. Therefore, the line 91 is printed on the outer surface of the side wall portion 15 of the rim portion 11.

The control unit (not illustrated) is configured to control the operations of the pad printing machine 402 and the wheel moving mechanism 405. The control unit includes a CPU (Central Processing Unit), a ROM (Read Only Memory), a RAM (Random Access memory), and the like. The control unit executes various processes by the CPU according to data or programs stored in the RAM or the ROM to form the decorated portions 90a to 90c on the outer surface of the side wall portion 15 of the rim portion 11 of the vehicular wheel 10.

The procedure for decorating the vehicular wheel 10 by the decorating device 401 is described below. Firstly, the vehicular wheel 10 is fixed to the wheel fixing shaft 453a (fixing process). Then, as illustrated in FIG. 27, the right end portion (a part of the transfer surface) of the outer circumferential surface 431a of the pad 431 is pressed onto the outer surface of the side wall portion 15 of the rim portion 11 of the vehicular wheel 10 by moving the left-right slide table 451.

Next, the pad 431, the forme roll 441, and the vehicular wheel 10 are rotated by activating the pad drive motor 432, the forme roll drive motor 442, and the wheel drive motor 453. The ink is adhered to the outer circumferential surface 431a of the pad 431 from the forme roll 441 with the rotation of the forme roll 441 and the pad 431. Then, with the rotation of the pad 431 and the vehicular wheel 10, the ink adhered to the outer circumferential surface 431a of the pad 431 is transferred onto the decoration position 94a on the outer surface of the side wall portion 15 of the rim portion 11. Thus, the decorated portion 90a is formed on the decoration position 94a. With the further rotation of the pad 431, the forme roll 441, and the vehicular wheel 10, the ink is adhered to the outer circumferential surface 431a of the pad 431 and the ink is adhered to the vehicular wheel 10 from the pad 431, whereby the decorated portion 90b is formed on the decoration position 94b of the rim portion 11. With the further rotation of the pad 431, the forme roll 441, and the vehicular wheel 10, the decorated portion 90c is formed on the decoration position 94c on the rim portion 11.

In this way, the area, which is longer than the maximum length (diameter) of the pad 431, on the rim portion 11 of the vehicular wheel 10 is decorated by the pad 431 of the pad printing machine 402. The area to be decorated by the pad 431 is longer than the circumferential length of the outer circumferential surface 431a of the pad 431.

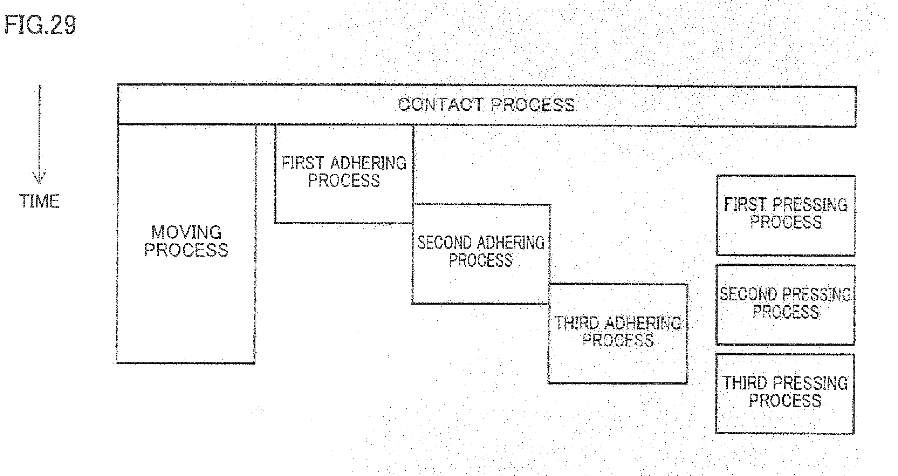

FIG. 29 is a diagram illustrating the process for decorating the vehicular wheel. The process after the vehicular wheel 10 is fixed to the wheel fixing shaft 453a until the right end portion (a part) of the outer circumferential surface 431a of the pad 431 is brought into contact with the outer surface (decoration surface) of the side wall portion 15 of the rim portion 11 is defined as a contact process. In the contact process, the pad 431 is not elastically deformed. Further, the process for rotating the vehicular wheel 10 is defined as a moving process. In the moving process, the vehicular wheel 10 moves in the circumferential direction of the rim portion 11 relative to the position of the pad 431 pressed onto the rim portion 11.

The present embodiment provides the effects similar to those described in the first to third embodiments as for the configuration similar to the first to third embodiments.

While the preferred embodiments of the teaching have been described, the present teaching is not limited to the embodiments above, and it is evident that many alternatives, modifications and variations may be envisaged as long as they fall within the scope of the appended claims. It is noted that the term "preferable" is non-exclusive in the present specification and indicates "preferable but not limited to".

As a modification of the second to fourth embodiments, ink may be adhered to the pads 131, 231, and 331 by using a sheet-type forme plate in place of the cylindrical forme rolls 141, 241, 341A, and 341B.

The pads used in the second to fourth embodiments are not limited to have a cylindrical shape. The pads may be formed into any shape so long as the cross-sectional shape of the transfer surface thereof is circular or arc. For example, the pads may have a columnar shape or a shape of a semicircular column. Alternatively, the pads may have a conic shape or a truncated cone shape.

The pad used in the fifth embodiment is not limited to have a cylindrical shape. The pad may be formed in any shape so long as the cross-sectional shape of the transfer surface thereof is circular or arc. For example, the pad may have a columnar shape. Alternatively, the pad may have a conic shape or a truncated cone shape.

In the second to fifth embodiments, the forme roll fixing shafts 142a, 242a, 342a, and 442a and the pad fixing shafts 134a, 233a, 333a, and 432a extend in the horizontal direction. However, the forme roll fixing shafts and the pad fixing shafts may extend in the direction crossing the horizontal direction (for example, up-down direction). In such modification, a configuration for applying ink onto the outer circumferential surfaces of the forme rolls 141, 241, 341A, 341B, and 441 is needed in place of the ink trays 143, 243, 343, and 443. For example, ink may be poured onto the outer circumferential surfaces of the forme rolls and excess ink may be scraped by a squeegee.

In the fourth embodiment, the two pads 231 and 331 are disposed at the positions shifted by 90° around the wheel fixing shaft 252a. However, the positions where the two pads 231 and 331 are disposed are not limited thereto. The installment space between the two pads 231 and 331 is not particularly limiting, so long as they are arranged in the circumferential direction around the wheel fixing shaft 252a.

The decorating device 1 in the first embodiment performs printing of the character 52 with white ink and printing of the character 52 with color ink by using two pads 24. However, printing of the character 52 with white ink and printing of the character 52 with color ink may be performed by one pad. The same is applied to the printing of the line 53. In this modification, when printing is switched from the printing with white ink to printing with color ink, the residual ink on the pad 24 and the residual ink on the forme plate 21 have to be removed. As for the printing procedure, printing may be performed with white ink on a plurality of portions arranged in the circumferential direction of the rim portion 11, and then, printing may be performed with color ink on the same portions. Alternatively, printing may be performed with white ink and color ink on a certain portion of the rim portion 11, and then, printing may be performed with white ink and color ink on another portion of the rim portion 11.

In the first embodiment, the decorated portions 50a to 50c and 51a to 51c are formed by laminating color ink on white ink. However, the decorated portions 50a to 50c and/or the decorated portions 51a to 51c are formed of only white ink.

In the fourth embodiment, the two pads 231 and 331 print different patterns (the character 52 and the line 53). However, the two pads 231 and 331 may print the same pattern of different colors. A pattern may be printed with white ink by using one pad 231, and then, the same pattern may be printed with color ink on the white ink by using another pad.

In the first to fourth embodiments, the vehicular wheel 10 is decorated by using two pads (24, 24) (231, 331) arranged in the circumferential direction of the rim portion 11 of the vehicular wheel 10. However, the vehicular wheel 10 may be decorated by using three or more pads arranged in the circumferential direction of the rim portion 11 of the vehicular wheel 10.

As a modification of the second and fifth embodiments, two pads may be arranged in the circumferential direction around the wheel fixing shafts 152a, 453a, and the decoration surface of the rim portion 11 of the vehicular wheel 10 may be decorated by the two pads, as in the fourth embodiment.

The pad printing machine 102 and the pad cleaner portion 106 in the second embodiment may be applied to the decorating devices 201 and 301 in the third and fourth embodiments to form a decorated portion formed by laminating color ink on white ink.

The pad printing machine 102 and the pad cleaner portion 106 in the second embodiment may be applied to the decorating device 401 in the fifth embodiment, and the forme roll mounting portion 104 may be configured to be movable in the front-back direction, to form a decorated portion by laminating color ink on white ink.

In the first to fifth embodiments, one pad performs printing at three portions on the decoration surface of the rim portion 11 of the vehicular wheel 10. However, one pad may perform printing at two portions on the decoration surface of the rim portion 11 of the vehicular wheel 10, or one pad may perform printing at four or more portions on the decoration surface of the rim portion 11 of the vehicular wheel 10.

In the first embodiment, ink of one color is laminated three times to print a pattern. However, the number of times of laminating ink of one color may be less than three times or more than three times. In addition, ink may not be laminated more than once. As a modification of the second to fifth embodiments, ink of one color may be laminated more than once to print a pattern.

The vehicular wheel according to the present teaching is not limited to a vehicular wheel 10 for a straddled vehicle. The vehicular wheel according to the present teaching may be a vehicular wheel for a vehicle other than a straddled vehicle.

The patterns of the first to fourth decorated portions in the present teaching are not limited to the patterns of the decorated portions 50a to 50c, 51a to 51c, 60a to 60c, 70a to 70c, 80a to 80c, 81a to 81c, and 90a to 90c in the first to fifth embodiments. However, it is preferable that the length of the decorated portion orthogonal to the circumferential direction of the rim portion 11 (longitudinal direction of the decoration surface) be not uniform. Further, it is preferable that the circumferential ends of the decorated portion (the ends in the longitudinal direction of the decoration surface) obliquely extend with respect to the direction orthogonal to the circumferential direction of the rim portion 11.

In the first to fifth embodiments, the distance between decorated portions decorated by one pad is constant. However, it may not be constant.

In the first to fifth embodiments, two decorated portions which are decorated by one pad and which have the same pattern are separated from each other in the longitudinal direction of the decoration surface. However, the configuration is not limited thereto. Two decorated portions, which are decorated by using one pad and have the same pattern, may be located such that the ends thereof are on the same position or may be located to partly overlap with each other, so long as they are arranged in the longitudinal direction of the decoration surface of the object to be decorated.

In the first to fifth embodiments, the direction in which the object to be decorated is moved in the moving process is the same. However, the object to be decorated may be moved in different directions, so long as it may be moved on the same linear line or curved line. For example, after a pressing process using one pad is performed, a moving process for moving the object to be decorated in a predetermined direction is performed. Thereafter, the pressing process is performed using the same pad, and then, the second moving process for moving the object to be decorated in the direction opposite to the direction in the first moving process is performed. After the second moving process, the pressing process for decorating the portion between the portions decorated by the first and second pressing processes with the same pad is performed.

In the first to fifth embodiments, the decorated portion is formed by pad printing. However, a plurality of decorated portions having the same pattern may be formed with a printing process other than pad printing. Printing includes both forme-based printing and formeless printing. Examples of forme-based printing include screen printing and pad printing. In forme-based printing, ink is transferred from a forme (corresponding to a pad in pad printing) to a printing target. Examples of the formeless printing include electrostatic photocopying (used by photocopiers), melting/dye-sublimation heat transfer (used by thermal printers), and inkjet printing. A decorated portion of which length in the direction orthogonal to the longitudinal direction of a decoration surface is not uniform may not be formed by painting a groove for decoration, coating using a masking, or attaching stickers. Even if it can be formed, much time is required, and therefore, productivity deteriorates. On the other hand, in the case where a plurality of decorated portions, each including a pattern having a non-uniform length in the direction orthogonal to the longitudinal direction of the decoration surface, are formed by printing, a degree of freedom in decoration and productivity can be improved.

### [Reference Signs List]

1, 101, 201, 301, 401 DECORATING DEVICE
2A∼2D, 102, 202, 302A, 302B, 402 PAD PRINTING MACHINE
3, 203 FIXING TABLE
4 ROTATION DRIVE UNIT
6 DRYING DEVICE
10 VEHICULAR WHEEL
10A, 10B, 10C, 10D, 10E VEHICULAR DECORATIVE WHEEL (VEHICULAR WHEEL)
11 RIM PORTION
14 BOTTOM WALL PORTION
15 SIDE WALL PORTION
21 PRINTING PLATE
24, 724 PAD
24a LOWER SURFACE (TRANSFER SURFACE)
25 PAD MOVING UNIT
25a PAD FIXING JIG
50a∼50c, 51a∼51c, 60a-60c, 70a∼70c, 80a∼80c, 81a∼81c, 90a∼90c DECORATED PORTION
52 CHARACTER
53, 61, 71, 91 LINE
54a∼54c, 55a∼55c, 64a∼64c, 74a∼74c, 94a∼94c DECORATION POSITION
71a, 91a LINE (FIRST PATTERN)
71b, 91b LINE (SECOND PATTERN)
105, 205, 405 WHEEL MOVING MECHANISM
141(141w, 141c), 241, 341A, 341B, 441 PLATE ROLL
131, 231, 331, 431 PAD
131a, 231a, 331a, 431a OUTER CIRCUMFERENTIAL SURFACE (TRANSFER SURFACE)
134a, 233a, 333a, 432a PAD FIXING SHAFT
152a, 252a, 453a WHEEL FIXING SHAFT

## Claims

1. A vehicular wheel (10) comprising:
an annular rim portion (11);
a hub portion (12) disposed inside of the rim portion (11); and
a spoke portion (13) that connects the rim portion (11) and the hub portion (12),
wherein the vehicular wheel (10) includes:
a wheel main body (40); **characterised in that**
a coating layer (41) formed on a surface of the wheel main body (40) by spraying, a surface of the coating layer (41) having protrusions which are fine particles in shape and formed by spraying paint in the form of fine particles;
the rim portion (11) includes:
a first decorated portion (50a-90a) that is formed by directly applying ink onto a surface of the coating layer (41), by printing and includes a pattern having a non-uniform length in a direction orthogonal to a circumferential direction of the rim portion (11); and
a second decorated portion (50b-90b) that is formed by directly applying ink onto the surface of the coating layer (41) by printing, is arranged with the first decorated portion (50a-90a) in the circumferential direction of the rim portion (11), and includes the same pattern as the first decorated portion (50a-90a).

2. The vehicular wheel (10) according to claim 1, wherein the first decorated portion (50a-90a) and the second decorated portion (50b-90b) are separated from each other in the circumferential direction of the rim portion (11).

3. The vehicular wheel (10) according to claim 1 or 2, wherein an end of the first decorated portion (50a-90a) in the circumferential direction of the rim portion (11) extends obliquely with respect to a direction orthogonal to the circumferential direction of the rim portion (11).

4. The vehicular wheel (10) according to claim 3, wherein the first decorated portion (50a-90a) includes:
a first pattern (71a, 91a) including an end of the first decorated portion (50a-90a) in the circumferential direction of the rim portion (11); and
a second pattern (71b, 91b) separated from the first pattern (71a, 91a) in the circumferential direction of the rim portion (11).

5. The vehicular wheel (10) according to claim 4, wherein facing ends of the first pattern (71a, 91a) and the second pattern (71b, 91b) of the first decorated portion (50a-90a) extend obliquely with respect to a direction orthogonal to the circumferential direction of the rim portion (11).

6. The vehicular wheel (10) according to any one of claims 1 to 5, wherein the first decorated portion (50a-90a) and the second decorated portion (50b-90b) have the same color.

7. The vehicular wheel (10) according to any one of claims 1 to 6, wherein the rim portion (11) includes:
a third decorated portion (50c-90c) formed by directly applying ink onto the surface of the coating layer (41), arranged with the first decorated portion (50a-90a) and the second decorated portion (50b-90b) in the circumferential direction of the rim portion (11), and includes a pattern same as the first decorated portion (50a-90a).

8. The vehicular wheel (10) according to any one of claims 1 to 7, wherein the rim portion (11) includes:
a fourth decorated portion (51a-51c) formed by directly applying ink onto the surface of the coating layer (41), arranged with the first decorated portion (50a-90a) and the second decorated portion (50b-90b) in the circumferential direction of the rim portion (11), and includes a pattern different from the first decorated portion (50a-90a).

9. The vehicular wheel (10) according to claim 8, wherein the fourth decorated portion (51a-51c) has a color different from at least one of the first decorated portion (50a-90a) and the second decorated portion (50b-90b).

10. The vehicular wheel (10) according to any one of claims 1 to 9, wherein the vehicular wheel (10) is a wheel for a straddled vehicle.

## Patentansprüche

1. Ein Fahrzeugrad (10), das folgende Merkmale aufweist:
einen ringförmigen Felgenabschnitt (11);
einen Nabenabschnitt (12), der im Inneren des Felgenabschnitts (11) angeordnet ist; und
einen Speichenabschnitt (13), der den Felgenabschnitt (11) und den Nabenabschnitt (12) verbindet,
wobei das Fahrzeugrad (10) Folgendes umfasst:
einen Radhauptkörper (40);
**dadurch gekennzeichnet, dass**:
eine Beschichtungsschicht (41) auf einer Oberfläche des Radhauptkörpers (40) durch Sprühen gebildet wird, wobei eine Oberfläche der Beschichtungsschicht (41) Vorsprünge aufweist, die in Form von Feinteilchen sind und durch Sprühen von Farbe in Form von Feinteilchen gebildet werden;
wobei der Felgenabschnitt (11) Folgendes umfasst:
einen ersten dekorierten Abschnitt (50a-90a), der durch direktes Auftragen von Tinte auf eine Oberfläche der Beschichtungsschicht (41) durch Drucken gebildet ist und eine Struktur mit einer ungleichmäßigen Länge in einer Richtung senkrecht zu einer Umfangsrichtung des Felgenabschnitts (11) umfasst; und
einen zweiten dekorierten Abschnitt (50b-90b), der durch direktes Auftragen von Tinte auf die Oberfläche der Beschichtungsschicht (41) durch Drucken gebildet ist, mit dem ersten dekorierten Abschnitt (50a-90a) in der Umfangsrichtung des Felgenabschnitts (11) angeordnet ist und dieselbe Struktur wie der erste dekorierte Abschnitt (50a-90a) umfasst.

2. Das Fahrzeugrad (10) gemäß Anspruch 1, bei dem der erste dekorierte Abschnitt (50a-90a) und der zweite dekorierte Abschnitt (50b-90b) in der Umfangsrichtung des Felgenabschnitts (11) voneinander getrennt sind.

3. Das Fahrzeugrad (10) gemäß Anspruch 1 oder 2, wobei ein Ende des ersten dekorierten Abschnitts (50a-90a) in der Umfangsrichtung des Felgenabschnitts (11) sich schräg in Bezug auf eine Richtung erstreckt, die senkrecht zu der Umfangsrichtung des Felgenabschnitts (11) ist.

4. Das Fahrzeugrad (10) gemäß Anspruch 3, wobei der erste dekorierte Abschnitt (50a-90a) Folgendes umfasst:
eine erste Struktur (71a, 91a), die ein Ende des ersten dekorierten Abschnitts (50a-90a) in der Umfangsrichtung des Felgenabschnitts (11) umfasst; und
eine zweite Struktur (51b, 91b), die von der ersten Struktur (71a, 91a) in der Umfangsrichtung des Felgenabschnitts (11) getrennt ist.

5. Das Fahrzeugrad (10) gemäß Anspruch 4, wobei zugewandte Enden der ersten Struktur (71a, 91a) und der zweiten Struktur (71b, 91b) des ersten dekorierten Abschnitts (50a-90a) sich schräg in Bezug auf eine Richtung erstrecken, die senkrecht zu der Umfangsrichtung des Felgenabschnitts (11) ist.

6. Das Fahrzeugrad (10) gemäß einem der Ansprüche 1 bis 5, wobei der erste dekorierte Abschnitt (50a-90a) und der zweite dekorierte Abschnitt (50b-90b) dieselbe Farbe aufweisen.

7. Das Fahrzeugrad (10) gemäß einem der Ansprüche 1 bis 6, wobei der Felgenabschnitt (11) Folgendes umfasst:
einen dritten dekorierten Abschnitt (50c-90c), der durch direktes Auftragen von Tinte auf die Oberfläche der Beschichtungsschicht (41) gebildet ist, mit dem ersten dekorierten Abschnitt (50a-90a) und dem zweiten dekorierten Abschnitt (50b-90b) in der Umfangsrichtung des Felgenabschnitts (11) angeordnet ist und eine Struktur umfasst, die dieselbe wie bei dem ersten dekorierten Abschnitt (50a-90a) ist.

8. Das Fahrzeugrad (10) gemäß einem der Ansprüche 1 bis 7, wobei der Felgenabschnitt (11) Folgendes umfasst:
einen vierten dekorierten Abschnitt (51a-51c), der durch direktes Auftragen von Tinte auf die Oberfläche der Beschichtungsschicht (41) gebildet ist, mit dem ersten dekorierten Abschnitt (50a-90a) und dem zweiten dekorierten Abschnitt (50b-90b) in der Umfangsrichtung des Felgenabschnitts (11) angeordnet ist und eine Struktur umfasst, die sich von dem ersten dekorierten Abschnitt (50a-90a) unterscheidet.

9. Das Fahrzeugrad (10) gemäß Anspruch 8, wobei der vierte dekorierte Abschnitt (51a-51c) eine Farbe aufweist, die sich von zumindest einem des ersten dekorierten Abschnitts (50a-90a) und des zweiten dekorierten Abschnitts (50b-90b) unterscheidet.

10. Das Fahrzeugrad (10) gemäß einem der Ansprüche 1 bis 9, wobei das Fahrzeugrad (10) ein Rad für ein rittlings zu fahrendes Fahrzeug ist.

## Revendications

1. Roue de véhicule (10), comprenant:
une partie de jante annulaire (11);
une partie de moyeu (12) disposée à l'intérieur de la partie de jante (11); et
une partie de rayons (13) qui connecte la partie de jante (11) et la partie de moyeu (12),
dans laquelle la roue de véhicule (10) comporte:
un corps principal de roue (40);
**caractérisée par le fait que**
une couche de revêtement (41) est formée sur une surface du corps principal de roue (40) par pulvérisation, une surface de la couche de revêtement (41) présentant des saillies qui se présentent sous forme de fines particules et formées par pulvérisation de peinture sous forme de fines particules;
la partie de jante (11) comporte:
une première partie décorée (50a à 90a) qui est formée en appliquant directement de l'encre sur une surface de la couche de revêtement (41) par impression, et comporte un motif présentant une longueur non uniforme dans une direction orthogonale à une direction circonférentielle de la partie de jante (11); et
une deuxième partie décorée (50b à 90b) qui est formée en appliquant directement de l'encre sur la surface de la couche de revêtement (41) par impression, est disposée avec la première partie décorée (50a à 90a) dans la direction circonférentielle de la partie de jante (11), et comporte le même motif que la première partie décorée (50a à 90a).

2. Roue de véhicule (10) selon la revendication 1, dans laquelle la première partie décorée (50a à 90a) et la deuxième partie décorée (50b à 90b) sont séparées l'une de l'autre dans la direction circonférentielle de la partie de jante (11).

3. Roue de véhicule (10) selon la revendication 1 ou 2, dans laquelle une extrémité de la première partie décorée (50a à 90a) dans la direction circonférentielle de la partie de jante (11) s'étend obliquement par rapport à une direction orthogonale à la direction circonférentielle de la partie de jante (11).

4. Roue de véhicule (10) selon la revendication 3, dans laquelle la première partie décorée (50a à 90a) comporte:
un premier motif (71a, 91a) comportant une extrémité de la première partie décorée (50a à 90a) dans la direction circonférentielle de la partie de jante (11); et
un deuxième motif (71b, 91b) séparé du premier motif (71a, 91a) dans la direction circonférentielle de la partie de jante (11).

5. Roue de véhicule (10) selon la revendication 4, dans laquelle les extrémités se faisant face du premier motif (71a, 91a) et du deuxième motif (71b, 91b) de la première partie décorée (50a à 90a) s'étendent obliquement par rapport à une direction orthogonale à la direction circonférentielle de la partie de jante (11).

6. Roue de véhicule (10) selon l'une quelconque des revendications 1 à 5, dans laquelle la première partie décorée (50a à 90a) et la deuxième partie décorée (50b à 90b) présentent la même couleur.

7. Roue de véhicule (10) selon l'une quelconque des revendications 1 à 6, dans laquelle la partie de jante (11) comporte:
une troisième partie décorée (50c à 90c) formée en appliquant directement de l'encre sur la surface de la couche de revêtement (41), disposée avec la première partie décorée (50a à 90a) et la deuxième partie décorée (50b à 90b) dans la direction circonférentielle de la partie de jante (11), et comporte un motif identique à celui de la première partie décorée (50a à 90a).

8. Roue de véhicule (10) selon l'une quelconque des revendications 1 à 7, dans laquelle la partie de jante (11) comporte:
une quatrième partie décorée (51a à 51c) formée en appliquant directement de l'encre sur la surface de la couche de revêtement (41), disposée avec la première partie décorée (50a à 90a) et la deuxième partie décorée (50b à 90b) dans la direction circonférentielle de la partie de jante (11), et comporte un motif différent de celui de la première partie décorée (50a à 90a).

9. Roue de véhicule (10) selon la revendication 8, dans laquelle la quatrième partie décorée (51a à 51c) présente une couleur différente d'au moins l'une parmi la première partie décorée (50a à 90a) et la deuxième partie décorée (50b à 90b).

10. Roue de véhicule (10) selon l'une quelconque des revendications 1 à 9, dans laquelle la roue de véhicule (10) est une roue pour un véhicule à selle.
